# EUROPEAN PATENT APPLICATION

(11) **EP 3 761 521 A1**
(43) Date of publication of application: **06.01.2021**
(21) Application number: 18911401.0
(22) Date of filing: 30.03.2018
(51) Int. Cl.: H04B 7/06

(54) **METHOD FOR SELECTING ANTENNA, AND RELATED APPARATUS**

(71) Applicant: HUAWEI TECHNOLOGIES CO., LTD., Shenzhen, Guangdong 518129 (CN)
(72) Inventor: DOU, Shengyue, Shenzhen, Guangdong 518129 (CN); ZHU, Huiying, Shenzhen, Guangdong 518129 (CN); JI, Liuliu, Shenzhen, Guangdong 518129 (CN); LI, Yuanjie, Shenzhen, Guangdong 518129 (CN)
(74) Representative: Gill Jennings & Every LLP
(86) International application number: PCT/CN2018/081449
(87) International publication number: WO 2019/183960

(57) **Abstract**

Embodiments of this application provide an antenna selection method and a related apparatus. The method includes: receiving downlink control information DCI from a network device; obtaining antenna selection indication information corresponding to the DCI, where the antenna selection indication information is used to indicate one or more first antennas in at least three antennas of a terminal device; and sending information to the network device by using the one or more first antennas. The antenna selection indication information corresponding to the DCI is represented by using one or more of the following: bit information included in the DCI; a cyclic redundancy check CRC mask of the DCI; and identification information of a time domain occupied by the DCI. According to the embodiments of this application, there are the following advantages: Transmit antenna selection of a terminal device having a plurality of transceiver antennas can be supported, quality of communication between the terminal device and a network device can be improved, and reliability of data transmission of the terminal device is enhanced. The method provided in the embodiments may be applied to a communications system such as a V2X system, an LTE-V system, a V2V system, an internet of vehicles system, an MTC system, an IoT system, an LTE-M system, an M2M system, and an internet of things system.

## Description

### TECHNICAL FIELD

This application relates to the field of communications technologies, and in particular, to an antenna selection method and a related apparatus.

### BACKGROUND

In a long term evolution (long term evolution, LTE) technology, an antenna may be used for data transmission between a terminal device and a network device. For example, one or more antenna radio frequency (radio frequency, RF) chains (chain) may be configured for the terminal device, where one RF chain may correspond to two physical antennas. In this case, for the terminal device, both the two physical antennas may be used as receive antennas used to receive data. To be specific, the two physical antennas of the terminal device may be mapped to 2R (R represents "receive", "receive") logical receive antennas. However, because a capability of the terminal device is limited, when the terminal device only can support data sending using one logical antenna, the terminal device needs to select one physical antenna from the two physical antennas, and the selected physical antenna is mapped to a 1T (T represents "transmit", "transmit") logical transmit antenna. When the terminal device supports 1T2R, to send information to the network device, the terminal device UE needs to select, as a transmit antenna for information sending, one physical antenna from the two physical antennas configured for the terminal device UE.

In the prior art, when four or more physical antennas are configured for UE, the UE may support 1T4R, 2T4R, 1T8R, or the like. However, only transmit antenna selection for uplink data transmission for 1T2R is supported in the prior art. When the UE has more antennas, transmit antenna selection for uplink data transmission for more antennas such as 1T4R, 2T4R, or 1T8R of the UE cannot be supported in the prior art. Because signal to interference plus noise ratios (signal to inference plus noise ratio, SINR) between different transmit antennas of the UE differ greatly, SINRs between different receive antennas also differ, and transmit antenna selection, of the UE for which a plurality of transceiver antennas are configured, for uplink data transmission cannot be supported in the prior art, a diversity gain cannot be obtained by using channel differences between different antennas, and a performance loss is large.

### SUMMARY

This application provides an antenna selection method and a related apparatus, to support transmit antenna selection of a terminal device having a plurality of transceiver antennas, improve quality of communication between the terminal device and a network device, and enhance reliability of data transmission of the terminal device. The antenna selection method has higher applicability.

According to a first aspect, an embodiment of this application provides an antenna selection method. The method may be applied to a terminal device side. The method includes: receiving downlink control information DCI from a network device; and obtaining antenna selection indication information corresponding to the DCI, where the antenna selection indication information is used to indicate one or more first antennas in at least three antennas of a terminal device. The first antenna herein may represent a physical antenna used for uplink transmission. In other words, the first antenna is an antenna used by the terminal device to send uplink information to the network device. The terminal device may send information to the network device by using the one or more first antennas indicated by using the antenna selection indication information. In this embodiment of this application, the terminal device may receive the DCI from the network device, and determine, based on the antenna selection indication information corresponding to the DCI, the one or more antennas used for uplink transmission, to implement antenna selection, to be specific, to select the one or more antennas used for uplink transmission from the three or more antennas of the terminal device, so that a diversity gain can be obtained by using a channel difference between different antennas, quality of communication between the terminal device and the network device can be improved, and reliability of data transmission of the terminal device is enhanced.

With reference to the first aspect, in a possible implementation, the antenna selection indication information corresponding to the DCI is represented by using one or more of the following: bit information included in the DCI; a cyclic redundancy check CRC mask of the DCI; and identification information of a time domain occupied by the DCI. It may be understood herein that, the bit information included in the DCI may be a bit value, of a specific bit (or referred to as a specified bit), in the DCI. The CRC mask of the DCI is a mask used to scramble a CRC of the DCI. The identification information of the time domain occupied by the DCI may be identification information of a subframe and/or a slot that carry/carries the DCI, for example, an odd/even number of the subframe and/or the slot that carry/carries the DCI. In this embodiment of this application, the antenna selection indication information corresponding to the DCI may be represented by using any one of the bit information included in the DCI, the CRC mask of the DCI, and the identification information of the time domain occupied by the DCI. Alternatively, the antenna selection indication information corresponding to the DCI may be a combination of any two or more of the bit information included in the DCI, the CRC mask of the DCI, and the identification information of the time domain occupied by the DCI. For example, the antenna selection indication information corresponding to the DCI may be the bit information included in the DCI and the CRC mask of the DCI. This is not limited herein. In this embodiment of this application, the antenna selection indication information corresponding to the DCI may be represented by using information in a plurality of representation forms. Implementations are diversified, an operation is flexible, and an application scope is larger.

With reference to the first aspect, in a possible implementation, the bit information included in the DCI may be a bit value corresponding to the one or more first antennas used for uplink transmission. In other words, the antenna selection indication information corresponding to the DCI may be represented by using indication information (or referred to as the bit value), of the specific bit, in the DCI, and different values, of the specific bit, in the DCI may be used as antenna selection indication information for indicating one or more physical antennas. A correspondence between the indication information, of the specific bit, in the DCI and physical antenna ports of the one or more first antennas (namely, the one or more physical antennas) used for uplink transmission may be specified in a communications protocol, or may be configured by the network device. The CRC mask of the DCI is a mask corresponding to the one or more first antennas used for uplink transmission. In other words, the one or more first antennas used for uplink transmission may respectively correspond to one or more masks, and the scrambled DCI is sent to the terminal device after the CRC of the DCI is scrambled by using the mask. Antenna selection indication information corresponding to the scrambled DCI is the mask corresponding to the one or more first antennas. The terminal device may determine, in a plurality of physical antennas by using masks that correspond to the physical antennas and that are of the scrambled DCI, the one or more first antennas used for uplink transmission, to send the information to the network device by using the first antenna. One group of masks may be used to correspondingly indicate a physical antenna port of one physical antenna. A correspondence between the antenna selection mask and the physical antenna port for transmit antenna selection may be specified in the communications protocol, or may be configured by the network device. The identification information of the time domain occupied by the DCI meets time domain identification information corresponding to the one or more first antennas used for uplink transmission. In other words, the identification information of the time domain occupied by the DCI is the odd/even number of the subframe in which the DCI sent by the network device to the terminal device is located and/or the odd/even number of the slot in which the DCI is located. The odd/even number of the subframe in which the DCI is located and/or the odd/even number of the slot in which the DCI is located may be used to represent the antenna selection indication information together with the CRC mask of the DCI and/or bit information, of the specific bit, in the DCI, to indicate, to the terminal device, the one or more first antennas used for uplink transmission. A correspondence between the one or more first antennas of the terminal device and the antenna selection indication information represented by using both the odd/even number of the subframe (and/or the odd/even number of the slot) in which the DCI is located and the CRC mask of the DCI (and/or the bit information, of the specific bit, in the DCI) may be specified in the communications protocol, or may be configured by the network device.

In this embodiment of this application, the one or more first antennas used for uplink transmission may be indicated by using the bit information, of the specific bit, included in the DCI. The different values, of the specific bit, in the DCI may indicate different physical antennas. Optionally, the one or more first antennas used for uplink transmission may be indicated by using the CRC mask of the DCI, and different masks may be used to correspondingly indicate different physical antennas. Optionally, the one or more first antennas used for uplink transmission may be indicated by using both the indication information, of the specific bit, in the DCI and the CRC mask of the DCI, and different combinations of the different values, of the specific bit, in the DCI and different CRC masks of the DCI may be used to indicate different physical antennas. Optionally, the one or more first antennas used for uplink transmission may be represented by using all of/both the odd/even number of the subframe in which the DCI is located and/or the odd/even number of the slot in which the DCI is located and the CRC mask of the DCI. Different combinations of different odd/even numbers of the subframe in which the DCI is located and/or different odd/even numbers of the slot in which the DCI is located and the different CRC masks of the DCI may be used to indicate different physical antennas. Optionally, the one or more first antennas used for uplink transmission may be represented by using all of/both the indication information, of the specified bit, in the DCI and the odd/even number of the subframe in which the DCI is located and/or the odd/even number of the slot in which the DCI is located. Different combinations of the different values, of the specified bit, in the DCI and the different odd/even numbers of the subframe in which the DCI is located and/or the different odd/even numbers of the slot in which the DCI is located may be used to indicate different physical antennas.

With reference to the first aspect, in a possible implementation, the at least three antennas of the terminal device belong to at least two antenna groups. Correspondingly, the antenna selection indication information is used to indicate a first antenna group in the at least two antenna groups. It may be understood herein that, one or more antennas included in the first antenna group are the one or more first antennas indicated by using the antenna selection indication information. After physical antennas of the terminal device are grouped into a plurality of antenna groups, the antenna group of the terminal device may alternatively be indicated by using one or more of the CRC mask of the DCI, the bit information, of the specific bit, in the DCI, and the identification information of the time domain occupied by the DCI, and an antenna included in the antenna group may be determined as the first antenna. An operation is simple, a representation form of antenna selection indication information for indicating the one or more first antennas used by the terminal device for uplink transmission is added, and diversity of manners of indicating antenna selection of the terminal device is enhanced. Different combinations of information such as the different CRC masks of the DCI, the different values, of the specific bit, in the DCI, and different identification information corresponding to different time domains occupied by the DCI may be used to indicate different antenna groups. For example, one group of masks may be used to correspondingly indicate one antenna group. A correspondence between the antenna selection mask and the antenna group may be specified in the communications protocol. Antenna selection indication information represented by using the different values, of the specific bit, in the DCI may alternatively be used to indicate different antenna groups of the terminal device. A correspondence between the value, of the specific bit, in the DCI and the first antenna group is specified in the communications protocol or is received from the network device. Different combinations of the different masks of the DCI and the different values, of the specific bit, in the DCI may be used to indicate different antenna groups. In this embodiment of this application, the corresponding antenna selection indication information used to indicate the antenna group of the terminal device is represented in diversified manners, and diversity of manners of indicating the antenna group of the terminal device is increased.

With reference to the first aspect, in a possible implementation, a correspondence between the antenna selection indication information and the first antenna group is specified in a communications protocol or received from the network device.

With reference to the first aspect, in a possible implementation, the at least two antenna groups of the terminal device may be specified in a communications protocol. It may be understood herein that, the at least three physical antennas of the terminal device may be grouped into at least two antenna groups in a manner specified in the communications protocol, and one antenna group may include one or more physical antennas.

With reference to the first aspect, in a possible implementation, the terminal device receives first indication information from the network device, where the first indication information is used to indicate the at least two antenna groups. The terminal device may determine, based on the first indication information received from the network device, a grouping manner in which the at least three physical antennas are grouped into one or more antenna groups, to group the plurality of physical antennas of the terminal device into the at least two antenna groups. One antenna group may include one or more physical antennas.

With reference to the first aspect, in a possible implementation, the terminal device receives radio resource control RRC signaling from the network device, where the RRC signaling includes the first indication information; or receives media access control control element MAC CE signaling from the network device, where the MAC CE signaling includes the first indication information. There are diversified manners of obtaining the first indication information, and an operation is more flexible.

With reference to the first aspect, in a possible implementation, the terminal device may send second indication information to the network device, where the second indication information is used to indicate the at least two antenna groups into which the at least three physical antennas of the terminal device are grouped, and may be further used to indicate one or more antennas included in each of the at least two antenna groups.

With reference to the first aspect, in a possible implementation, the terminal device may report capability information to the network device, where the capability information is used to indicate that the terminal device supports selection of the one or more antennas from the at least three antennas. In other words, the capability information is used to indicate that the terminal device supports one or more of 1T4R, 2T4R, 1T8R, and 2T8R. In this embodiment of this application, the antenna selection indication information for indicating the one or more first antennas used by the terminal device for uplink transmission may be determined based on the capability information reported by the terminal device, so that reliability of antenna selection, of the terminal device, for uplink transmission can be enhanced.

With reference to the first aspect, in a possible implementation, the antenna selection indication information is based on an uplink transmission mode of the terminal device. In this embodiment of this application, the antenna selection indication information for indicating the one or more first antennas used by the terminal device for uplink transmission may be determined based on the uplink transmission mode of the terminal device, so that reliability of antenna selection, of the terminal device, for uplink transmission can be enhanced, and reliability of data transmission of the terminal device is improved.

With reference to the first aspect, in a possible implementation, a correspondence between the antenna selection indication information and the one or more first antennas is specified in the communications protocol or received from the network device.

According to a second aspect, an embodiment of this application provides an antenna selection method. The method may be applied to a network device side. The method includes: generating downlink control information DCI; and sending the DCI to a terminal device. Antenna selection indication information corresponding to the DCI is used to indicate one or more first antennas that are in at least three antennas of the terminal device and that are used for uplink transmission.

With reference to the second aspect, in a possible implementation, the antenna selection indication information corresponding to the DCI is represented by using one or more of the following: bit information included in the DCI; a cyclic redundancy check CRC mask of the DCI; and identification information of a time domain occupied by the DCI. The bit information included in the DCI is a bit value corresponding to the one or more first antennas used for uplink transmission; the CRC mask of the DCI is a mask corresponding to the one or more first antennas used for uplink transmission; or the identification information of the time domain occupied by the DCI meets time domain identification information corresponding to the one or more first antennas used for uplink transmission.

With reference to the second aspect, in a possible implementation, the antenna selection indication information corresponding to the DCI is represented by using the bit information included in the DCI. A network device may determine antenna selection indication information, generate DCI including the antenna selection indication information, and send the DCI to the terminal device. The antenna selection indication information corresponding to the DCI is the bit information included in the DCI. A correspondence between the bit information, of a bit field, included in the DCI and the one or more first antennas may be specified in a communications protocol or configured based on the at least three antennas of the terminal device.

With reference to the second aspect, in a possible implementation, the antenna selection indication information corresponding to the DCI is represented by using the CRC mask of the DCI. The network device may determine antenna selection indication information, where the antenna selection indication information is a CRC mask used to scramble the DCI. The network device may scramble a CRC of the DCI based on the antenna selection indication information to obtain scrambled DCI, and send the scrambled DCI to the terminal device. A correspondence between the CRC mask of the DCI and the one or more first antennas used by the terminal device for uplink transmission is specified in a communications protocol or configured based on the at least three antennas of the terminal device.

With reference to the second aspect, in a possible implementation, the antenna selection indication information corresponding to the DCI is represented by using the identification information of the time domain occupied by the DCI. The network device may determine antenna selection indication information, where the antenna selection indication information is used to indicate the time domain occupied by the DCI; and send the DCI to the terminal device in the time domain indicated by using the antenna selection indication information. The antenna selection indication information corresponding to the DCI is identification information of the time domain occupied by the DCI. A correspondence between the identification information of the time domain occupied by the DCI and the one or more first antennas of the terminal device is specified in a communications protocol, or is configured based on the at least three antennas of the terminal device.

With reference to the second aspect, in a possible implementation, the network device may determine, based on capability information or an uplink transmission mode of the terminal device, the one or more antennas that are in the at least three antennas of the terminal device and that are used for uplink transmission, generate the DCI, and send the DCI to the terminal device, where the DCI includes a bit value corresponding to the one or more first antennas used by the terminal device for uplink transmission.

With reference to the second aspect, in a possible implementation, the network device may determine, based on capability information or an uplink transmission mode of the terminal device, the one or more first antennas that are in the at least three antennas of the terminal device and that are used for uplink transmission, scramble the CRC of the DCI by using the mask corresponding to the one or more antennas used for uplink transmission, and send the scrambled DCI to the terminal device.

With reference to the second aspect, in a possible implementation, the network device may determine, based on capability information or an uplink transmission mode of the terminal device, the one or more first antennas that are in the at least three antennas of the terminal device and that are used for uplink transmission, and send the DCI to the terminal device in a first time domain. The first time domain meets the time domain identification information corresponding to the one or more first antennas used by the terminal device for uplink transmission. The first time domain may be an odd/even number of a subframe occupied by the DCI and/or a slot occupied by the DCI, and the odd/even number of the subframe and/or the slot corresponds to the one or more first antennas used by the terminal device for uplink transmission.

With reference to the second aspect, in a possible implementation, the at least three antennas of the terminal device belong to at least two antenna groups. The antenna selection indication information for indicating the one or more first antennas used by the terminal device for uplink transmission is used to indicate a first antenna group in the at least two antenna groups. It may be understood that, one or more antennas included in the first antenna group are the one or more first antennas indicated by using the antenna selection indication information.

With reference to the second aspect, in a possible implementation, the at least two antenna groups of the terminal devices are specified in a communications protocol.

With reference to the second aspect, in a possible implementation, a correspondence between the antenna selection indication information for indicating the one or more first antennas used by the terminal device for uplink transmission and the first antenna group is specified in a communications protocol or configured based on the at least two antenna groups of the terminal device.

With reference to the second aspect, in a possible implementation, the network device may send first indication information to the terminal device, where the first indication information is used to indicate the at least two antenna groups of the terminal device. Optionally, the network device may send radio resource control RRC signaling to the terminal device, where the RRC signaling includes the first indication information; or send media access control control element MAC CE signaling to the terminal device, where the MAC CE signaling includes the first indication information.

With reference to the second aspect, in a possible implementation, the network device may receive second indication information from the terminal device, where the second indication information is used to indicate the at least two antenna groups of the terminal device.

With reference to the second aspect, in a possible implementation, the network device may determine, based on capability information of the terminal device, the antenna selection indication information for indicating the one or more first antennas used by the terminal device for uplink transmission, where the capability information is used to indicate a capability of the terminal device to support selection of the one or more antennas from the at least three antennas.

With reference to the second aspect, in a possible implementation, the network device may determine, based on an uplink transmission mode of the terminal device, the antenna selection indication information for indicating the one or more first antennas used by the terminal device for uplink transmission. In other words, the antenna selection indication information is based on the uplink transmission mode of the terminal device.

With reference to the second aspect, in a possible implementation, the capability information and/or the uplink transmission mode of the terminal device are/is used to indicate that the terminal device supports one or more of 1T4R, 2T4R, 1T8R, and 2T8R.

With reference to the second aspect, in a possible implementation, a correspondence between the antenna selection indication information for indicating the one or more first antennas used by the terminal device for uplink transmission and the one or more first antennas of the terminal device is specified in the communications protocol.

According to a third aspect, an embodiment of this application provides a terminal device. The terminal device includes units and/or modules configured to perform the antenna selection method provided in any one of the first aspect and/or the possible implementations of the first aspect. Therefore, the terminal device can also achieve beneficial effects (or advantages) of the antenna selection method provided in the first aspect.

According to a fourth aspect, an embodiment of this application provides a network device. The network device includes units and/or modules configured to perform the antenna selection method provided in any one of the second aspect and/or the possible implementations of the second aspect. Therefore, the network device can also achieve beneficial effects (or advantages) of the antenna selection method provided in the second aspect.

According to a fifth aspect, an embodiment of this application provides a terminal device. The terminal device includes a memory, a transceiver, and a processor. The memory, the transceiver, and the processor are connected through a communications bus. The memory is configured to store a group of program code. The transceiver and the processor are configured to invoke the program code stored in the memory, to perform the antenna selection method provided in any one of the first aspect and/or the possible implementations of the first aspect. Therefore, the terminal device can also achieve beneficial effects of the antenna selection method provided in the first aspect.

According to a sixth aspect, an embodiment of this application provides a network device. The network device includes a memory, a transceiver, and a processor. The memory, the transceiver, and the processor are connected through a communications bus. The memory is configured to store a group of program code. The transceiver and the processor are configured to invoke the program code stored in the memory, to perform the antenna selection method provided in any one of the second aspect and/or the possible implementations of the second aspect. Therefore, the network device can also achieve beneficial effects of the antenna selection method provided in the second aspect.

According to a seventh aspect, an embodiment of this application provides a computer-readable storage medium. The computer-readable storage medium stores an instruction. When the instruction is run on a terminal device, the terminal device is enabled to perform the antenna selection method provided in any one of the first aspect and/or the possible implementations of the first aspect, and beneficial effects of the antenna selection method provided in the first aspect can also be achieved.

According to an eighth aspect, an embodiment of this application provides a computer-readable storage medium. The computer-readable storage medium stores an instruction. When the instruction is run on a network device, the network device is enabled to perform the antenna selection method provided in any one of the second aspect and/or the possible implementations of the second aspect, and beneficial effects of the antenna selection method provided in the second aspect can also be achieved.

According to a ninth aspect, an embodiment of this application provides a communications apparatus. The communications apparatus may be a chip or a plurality of chips that work cooperatively. The communications apparatus includes an input device coupled to the communications apparatus (for example, a chip), and is configured to perform the technical solutions provided in the first aspect of embodiments of this application. It should be understood that, "coupling" herein means that two components are directly or indirectly combined with each other. Such combination may be fixed or mobile, and such combination may allow communication of fluid, electricity, an electrical signal, or another type of signal between the two components.

According to a tenth aspect, an embodiment of this application provides a communications apparatus. The communications apparatus may be a chip or a plurality of chips that work cooperatively. The communications apparatus includes an input device coupled to the communications apparatus (for example, a chip), and is configured to perform the technical solutions provided in the second aspect of embodiments of this application. It should be understood that, "coupling" herein means that two components are directly or indirectly combined with each other. Such combination may be fixed or mobile, and such combination may allow communication of fluid, electricity, an electrical signal, or another type of signal between the two components.

According to an eleventh aspect, an embodiment of this application provides an antenna selection system. The antenna selection system includes a processor. The processor is configured to: couple to a memory, and read and run an instruction in the memory to support an apparatus for antenna selection in implementing the functions in the first aspect, for example, generating or processing the information in the antenna selection method provided in the first aspect. In a possible design, the antenna selection system further includes the memory. The memory is configured to store a program instruction and data that are necessary for the apparatus for antenna selection. The antenna selection system may include a chip, or may include a chip and another discrete device.

According to a twelfth aspect, an embodiment of this application provides an antenna selection system. The antenna selection system includes a processor. The processor is configured to: couple to a memory, and read and run an instruction in the memory to support an apparatus for antenna selection in implementing the functions in the second aspect, for example, generating or processing the information in the antenna selection method provided in the second aspect. In a possible design, the antenna selection system further includes the memory. The memory is configured to store a program instruction and data that are necessary for the apparatus for antenna selection. The antenna selection system may include a chip, or may include a chip and another discrete device.

According to a thirteenth aspect, an embodiment of this application provides a computer program product including an instruction. When the computer program product runs on a terminal device, the terminal device is enabled to perform the antenna selection method provided in the first aspect, and beneficial effects of the antenna selection method provided in the first aspect can also be achieved.

According to a fourteenth aspect, an embodiment of this application provides a computer program product including an instruction. When the computer program product runs on a network device, the network device is enabled to perform the antenna selection method provided in the second aspect, and beneficial effects of the antenna selection method provided in the second aspect can also be achieved.

### BRIEF DESCRIPTION OF DRAWINGS

FIG. 1 is a schematic diagram of an infrastructure of a communications system according to an embodiment of this application;
FIG. 2 is a schematic diagram of antenna selection of a terminal device according to an embodiment of this application;
FIG. 3 is another schematic diagram of antenna selection of a terminal device according to an embodiment of this application;
FIG. 4 is a schematic flowchart of an antenna selection method according to an embodiment of this application;
FIG. 5 is another schematic flowchart of an antenna selection method according to an embodiment of this application;
FIG. 6 is a schematic structural diagram of a communications apparatus according to an embodiment of this application;
FIG. 7 is a schematic structural diagram of a terminal device according to an embodiment of this application; and
FIG. 8 is a schematic structural diagram of a network device according to an embodiment of this application.

### DESCRIPTION OF EMBODIMENTS

The following clearly and completely describes technical solutions in this application with reference to the accompanying drawings in this application.

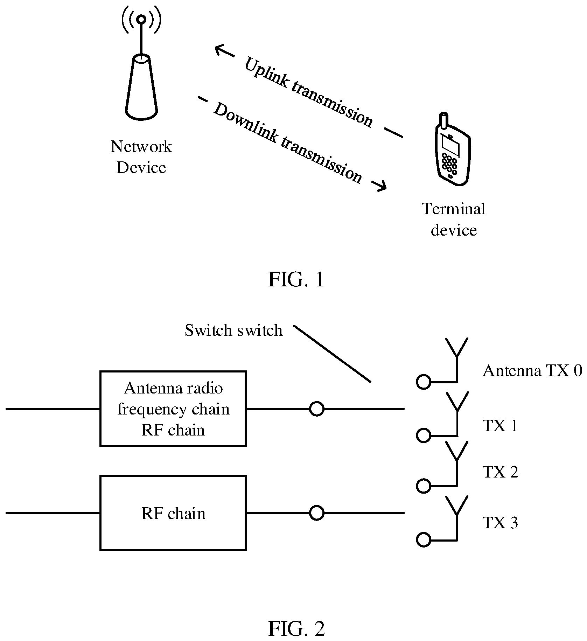

An antenna selection method (which may be referred to as an antenna selection method subsequently for ease of description) provided in embodiments of this application may be applicable to an LTE system or other wireless communications system for which various radio access technologies are used, for example, systems for which access technologies such as code division multiple access (code division multiple access, CDMA), frequency division multiple access (frequency division multiple access, FDMA), time division multiple access (time division multiple access, TDMA), orthogonal frequency division multiple access (orthogonal frequency division multiple access, OFDMA), and single-carrier frequency division multiple access (single carrier-frequency division multiple access, SC-FDMA)) are used. The antenna selection method provided in the embodiments of this application may alternatively be applicable to another wireless communications system such as a subsequent evolved system such as a 5th generation wireless (5^{th} generation, 5G, also referred to as new radio (New radio, NR)) system (or referred to as an NR system). This is not limited herein. FIG. 1 is a schematic diagram of an infrastructure of a communications system according to an embodiment of this application. The communications system provided in this embodiment of this application includes but is not limited to a network device and a terminal device. This is not limited herein. The network device and the terminal device that are shown in FIG. 1 each may be referred to as a communications apparatus. The network device and the terminal device each may be a chip or a plurality of chips working cooperatively. The network device and/or the terminal device may further include an input device coupled to the network device and/or the terminal device, and are/is configured to perform the antenna selection method provided in the embodiments of this application. Details may be determined based on an actual application scenario, and are not limited herein. The network device and the terminal device that are provided in this embodiment of this application may transmit data or signaling by using an antenna. The transmission includes uplink transmission and downlink transmission. It may be understood herein that, the uplink transmission may be that the terminal device sends the data or the signaling to the network device, and the downlink transmission may be that the network device sends the data or the signaling to the terminal device.

The terminal device in this application may be a device (device) providing a voice and/or data connectivity for a user, and may include a wired terminal and a wireless terminal. The wireless terminal may be a handheld device having a wireless connection function, another processing device connected to a wireless modem, or a mobile terminal that communicates with one or more core networks by using a radio access network. For example, the wireless terminal may be a mobile telephone, a computer, a tablet computer, a personal digital assistant (personal digital assistant, PDA), a mobile internet device (mobile Internet device, MID), a wearable device, an e-book reader (e-book reader), and the like. For another example, the wireless terminal may alternatively be a portable, pocket-sized, handheld, computer built-in, or vehicle-mounted mobile device. For still another example, the wireless terminal may alternatively be a mobile station (mobile station) or an access point (access point). User equipment (user equipment, UE) is a type of the terminal device, and is a name in an LTE system. For ease of description, in a subsequent description of this application, the devices mentioned above are described by using the terminal device as an example. The network device in the embodiments of this application is a communications apparatus that is deployed in a radio access network (radio access network, RAN) and that is configured to provide a wireless communication function for the terminal device. The network device may include macro base stations, micro base stations, relay stations, access points, base station controllers, transmission/reception nodes (transmission reception point, TRP), and the like that are in various forms. In systems for which different radio access technologies are used, specific names of the network device may be different. For example, in an LTE network, the network device (or a base station) is referred to as an evolved NodeB (evolved nodeB, eNB), or may be referred to as a new radio NodeB (new radio nodeB, gNB) in the subsequent evolved system. For ease of description, in a subsequent description of this application, the devices mentioned above are collectively referred to as the network device.

The antenna selection method provided in the embodiments of this application is based on the system architecture shown in FIG. 1. In an application scenario in which the terminal device supports 1T4R, 2T4R, 1T8R, or the like, closed-loop (close-loop) antenna selection, of the terminal device, for uplink data sending may be supported. In the embodiments of this application, the network device may indicate, based on a capability of the terminal device, which antenna or antennas are specifically selected, in an uplink transmission process of the terminal device, as a transmit antenna or transmit antennas for sending information to the network device. In the embodiments of this application, the antenna selection that the network device indicates the terminal device to perform may be specifically selection of a physical antenna of the terminal device. To be specific, when three, four, eight, or more physical antennas are configured for the terminal device, the network device may indicate, based on a quantity of transmit antennas that can be supported by the terminal device, the terminal device to select one or more physical antennas, as the transmit antenna or the transmit antennas for sending the information to the network device, from the plurality of physical antennas configured for the terminal device. In the embodiments of this application, the terminal device may select, according to the indication of the network device, a corresponding physical antenna from the plurality of physical antennas supported by the terminal device, to send the information to the network device. The information sent by the terminal device to the network device may be physical uplink shared channel (physical uplink shared channel, PUSCH) data, or may be a physical uplink control channel (physical uplink control channel, PUCCH), a sounding reference signal (sounding reference signal, SRS), or the like. This is not limited herein.

FIG. 2 is a schematic diagram of antenna selection of a terminal device according to an embodiment of this application. As shown in FIG. 2, it is assumed that four physical antennas are configured for the terminal device, and may be marked as an antenna (TX for short) 0, TX 1, TX 2, and TX 3. It is assumed that the terminal device supports 2T4R, two RF chains may be configured for the terminal device, where one RF chain may correspond to two physical antennas. For example, one of the two RF chains may correspond to TX 0 and TX 1, and the other RF chain may correspond to TX 2 and TX 3. The correspondence is merely an example. A specific correspondence may be determined based on a requirement of an actual application scenario. This is not limited herein. In two physical antennas corresponding to each RF chain, a physical antenna connected to the RF chain may be switched by using a switch component, so that information may be sent to a network device by using the physical antenna that establishes the connection. As shown in FIG. 2, two physical antennas may be selected for either of the two RF chains. The terminal device may receive information by using the four physical antennas, and may send information by using two of the four physical antennas, so that transmit antenna selection of the terminal device supporting 2T4R is implemented, a diversity gain can be obtained by using a channel difference between different antennas, an operation is flexible, and applicability is higher.

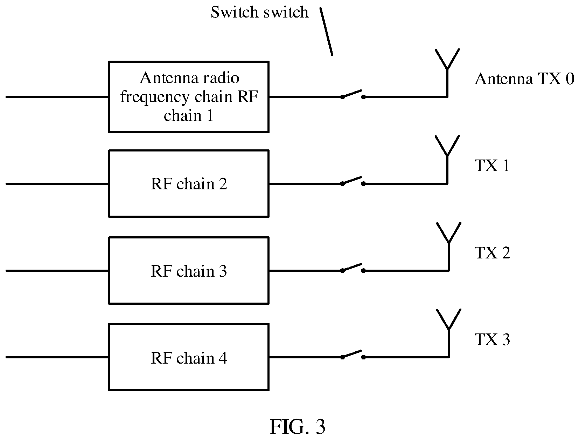

Optionally, FIG. 3 is another schematic diagram of antenna selection of a terminal device according to an embodiment of this application. It is assumed that four physical antennas are configured for the terminal device, for example, an antenna (TX for short) 0, TX 1, TX 2, and TX 3, and four RF chains may also be configured for the terminal device, for example, an RF chain 1, an RF chain 2, an RF chain 3, and an RF chain 4. One RF chain may correspond to one physical antenna. For example, the RF chain 1 may correspond to TX 0, the RF chain 2 may correspond to TX 1, the RF chain 3 may correspond to TX 2, and the RF chain 4 may correspond to TX 3. The foregoing correspondence between the RF chains and the antennas is merely an example. A specific correspondence may be determined based on a requirement of an actual application scenario. This is not limited herein. As shown in FIG. 3, in a physical antenna corresponding to any RF chain, a switch component may be used to connect the RF chain to or disconnect the RF chain from the physical antenna connected to the RF chain, so that whether to select the physical antenna connected to the RF chain to send information to a network device can be implemented. The correspondences, shown in FIG. 2 and FIG. 3, between the RF chains and the physical antennas are merely examples, and include but are not limited to the connection manners shown in FIG. 2 and FIG. 3. A specific correspondence may be determined based on an actual application scenario. This is not limited herein.

For ease of understanding, the following briefly describes parameters such as a physical antenna, a physical antenna port, and a logical antenna port that are or may be in the embodiments of this application.

The physical antenna may be referred to as an antenna for short, or may also be referred to as a user antenna, a user antenna port, a user port, or the like. This is not limited herein. For ease of description, the following uses the physical antenna as an example for description. Physical antennas of a terminal device (and/or a network device) may include a transmit antenna used to send information and a receive antenna used to receive information. The antenna may have a correspondence with a feed port of the antenna. Generally, a physical antenna may refer to a physical antenna array element. Different physical antennas may be differentiated and/or marked by using different identifiers or indexes (for example, an antenna port 0 (port 0), an antenna port 1 (port 1), an antenna port 2 (port 2), and TX 0, TX 1, TX 2, and TX 3 that are shown in FIG. 2 or FIG. 3). However, the antenna ports used to mark the physical antennas herein are different from antenna ports for carrying physical channels. For ease of description, the antenna port used to mark the physical antenna may be described by using the physical antenna port, and the antenna port used to carry the physical channel may be described by using the logical antenna port. A transmit antenna to be selected according to the antenna selection method provided in the embodiments of this application is a physical entity (that is, the physical antenna), and may be associated with or not associated with the logical antenna port in design.

The logical antenna port is also referred to as an antenna port for short, and is a logical port. For ease of description, the following uses the logical antenna port as an example for description. The logical antenna port may include but is not limited to a logical antenna port of a channel used for uplink data transmission (which may be referred to as an uplink data channel for short for ease of description), for example, an antenna port of a PUSCH; a logical antenna port of a reference signal used for demodulation (a demodulation reference signal for short), for example, a logical antenna port of a demodulation reference signal (demodulation reference signal, DMRS); and a logical antenna port of a reference signal used for channel sounding (which may be referred to as a sounding reference signal for short for ease of description), for example, a logical antenna port of a sounding reference signal (sounding reference signal, SRS). The logical antenna port provided in the embodiments of this application is an antenna port used to carry a specific physical channel and/or physical signal. Regardless of whether signals sent by using a same logical antenna port are sent by using a same physical antenna or different physical antennas, channels corresponding to paths through which the signals pass during spatial transmission may be considered to be the same or related (for example, large-scale channel characteristics such as channel matrices H are the same). In other words, when demodulating the signals sent on the same logical antenna port, a receive end may consider that the channels of the signals are the same or related. Generally, a signal receive end may identify, by using a logical antenna port, different signals transmitted on different transmission channels.

Generally, a mapping relationship between a logical antenna and the physical antenna is an implementation problem, and one or more physical antennas may be weighted to form one logical antenna. Mapping between the logical antenna port corresponding to the logical antenna and the physical antenna port used to mark the physical antenna may also be a user implementation problem. For details, refer to user implementation content related to mapping between the physical antenna and the logical antenna and mapping between the physical antenna port and the logical antenna port in a related communications protocol. This is not limited herein.

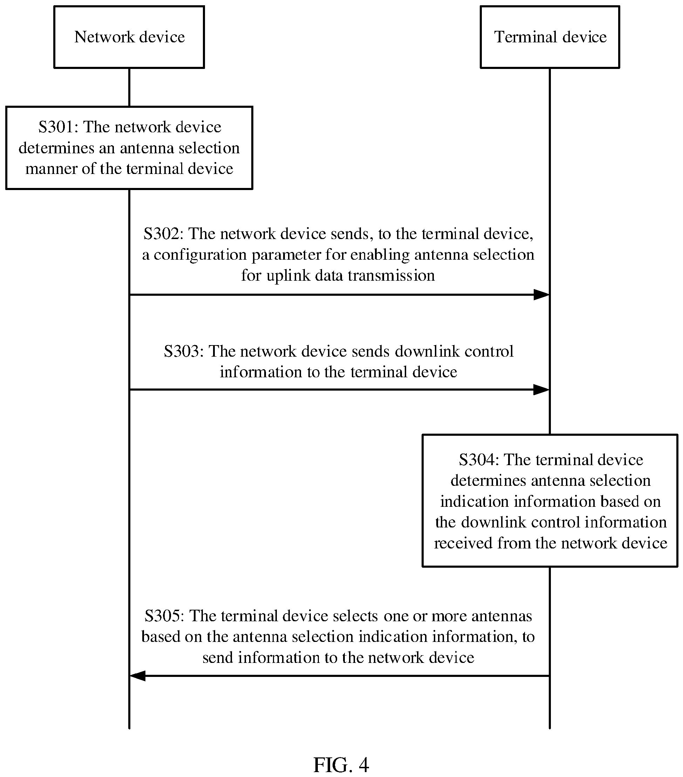

The following describes the antenna selection method and related apparatuses that are provided in the embodiments of this application with reference to FIG. 4 to FIG. 8.

FIG. 4 is a schematic flowchart of an antenna selection method according to an embodiment of this application. The method provided in this embodiment of this application may include the following steps.

S301: A network device determines an antenna selection manner of a terminal device.

In some feasible implementations, the terminal device may report capability information to the network device based on a capability status of the terminal device. The network device may obtain the capability information of the terminal device through reporting by the terminal device, and determine a capability of the terminal device based on the capability information reported by the terminal device. Optionally, the network device may alternatively obtain capability information of the terminal device from a core network, and determine a capability of the terminal device based on the obtained capability information of the terminal device. For ease of description, the following uses a manner of reporting by the terminal device as an example for description. Herein, the capability of the terminal device may be an antenna selection manner in which the terminal device supports selection of one or more antennas from a plurality of antennas. For example, when the terminal device supports 1T2R, it may indicate that the capability of the terminal device is supporting sending using one physical antenna and receiving using two physical antennas. To be specific, the antenna selection manner of the terminal device is selecting, as a transmit antenna for uplink transmission, one physical antenna from two physical antennas (which may be expressed, for ease of description, as that the antenna selection manner of the terminal device is 1T2R), and it also indicates that the terminal device has at least two physical antennas. When the terminal device supports 1T4R, it may indicate that the capability of the terminal device is supporting sending using one physical antenna and receiving using four physical antennas. To be specific, the antenna selection manner of the terminal device is selecting, as a transmit antenna for uplink transmission, one physical antenna from four physical antennas (which may be expressed, for ease of description, as that the antenna selection manner of the terminal device is 1T4R), and it also indicates that the terminal device has at least four physical antennas. When the terminal device supports 2T4R, it may indicate that the capability of the terminal device is supporting sending using two physical antennas and receiving using four physical antennas. To be specific, the antenna selection manner of the terminal device is selecting, as transmit antennas for uplink transmission, two physical antennas from four physical antennas (which may be expressed, for ease of description, as that the antenna selection manner of the terminal device is 2T4R), and it also indicates that the terminal device has at least four physical antennas. When the terminal device supports 1T8R, it may indicate that the capability of the terminal device is supporting sending using one physical antenna and receiving using eight physical antennas. To be specific, the antenna selection manner of the terminal device is selecting, as a transmit antenna for uplink transmission, one physical antenna from eight physical antennas (which may be expressed, for ease of description, as that the antenna selection manner of the terminal device is 1T8R), and it also indicates that the terminal device has at least eight physical antennas.

In some feasible implementations, the capability information reported by the terminal device to the network device may be capability identification information used to indicate (in other words, represent) that the terminal device supports selection of one or more physical antennas, as a transmit antenna or transmit antennas for sending information to the network device, from a plurality of physical antennas. For example, when the terminal supports 1T4R, the capability information reported by the terminal device to the network device may be 1T4R. That is, the antenna selection manner of the terminal device is 1T4R. When the capability information reported by the terminal device to the network device is 1T4R, the network device may determine that the terminal device supports sending using one physical antenna and receiving using four physical antennas, and may also determine that the terminal device has four physical antennas. Likewise, when the terminal supports 2T4R, the capability information reported by the terminal device to the network device may be 2T4R. That is, the antenna selection manner of the terminal device is 2T4R. When the capability information reported by the terminal device to the network device is 2T4R, the network device may determine that the terminal device supports sending using two physical antennas and receiving using four physical antennas, and may also determine that the terminal device has four physical antennas. By analogy, the network device may determine, based on the capability information reported by the terminal device, that the terminal device supports 1T8R, 2T8R, or the like. Details are not described herein again.

Optionally, in some feasible implementations, the network device may alternatively determine the antenna selection manner of the terminal device based on an uplink transmission mode (transmission mode) of the terminal device. For example, when the uplink transmission mode of the terminal device is a TM 1, it indicates that uplink transmission of the terminal device is single-antenna transmission. The network device may determine, based on the uplink transmission mode TM 1 of the terminal device, that the capability of the terminal device is that the terminal device can support only information sending using one physical antenna. When the uplink transmission mode of the terminal device is a TM 2, it indicates that the uplink transmission mode of the terminal device is uplink multiple-input multiple-output (multiple-input multiple-output, MIMO) multi-antenna transmission. The network device may determine, based on the uplink transmission mode TM 2 of the terminal device, that the terminal device can support information sending using a plurality of physical antennas. The uplink transmission mode of the terminal device may be configured by the network device, and there is a correspondence between the uplink transmission mode of the terminal device and a manner of antenna selection, of the terminal device, for uplink data sending. In other words, there is a correspondence between the manner (for example, 1T2R, 1T4R, or 2T4R) of antenna selection, of the terminal device, for uplink data sending and the uplink transmission mode configured by the network device for the terminal device. The correspondence may be specified in a communications protocol, or may be configured by the network device by using signaling. This is not limited herein.

S302: The network device sends, to the terminal device, a configuration parameter for enabling antenna selection for uplink data transmission.

In some feasible implementations, the network device may send, to the terminal device by using higher layer signaling, the configuration parameter for enabling antenna selection, of the terminal device, for uplink data transmission. In other words, antenna selection, of the terminal device, for uplink data transmission is configured by the network device by using higher layer signaling. Optionally, the configuration parameter that is for enabling antenna selection, of the terminal device, for uplink data transmission and that is sent by the network device to the terminal device may be ue-TransmitAntennaSelection. The network device may indicate, by using a value of the configuration parameter ue-TransmitAntennaSelection, whether antenna selection, of the terminal device, for uplink data transmission is closed-loop antenna selection or open-loop antenna selection. If the configuration parameter sent by the network device to the terminal device indicates that antenna selection, of the terminal device, for uplink data transmission is closed-loop antenna selection, the following steps S303 to S305 may be performed. If the configuration parameter sent by the network device to the terminal device indicates that antenna selection, of the terminal device, for uplink data transmission is open-loop antenna selection, an antenna, of the terminal device, for uplink data transmission is not specified in the communications protocol. In this case, antenna selection, of the terminal device, for uplink data transmission belongs to implementation behavior of the terminal device. This is not limited herein. If the network device does not send, to the terminal device, the configuration parameter for enabling antenna selection for uplink data transmission, the terminal device does not perform antenna selection for uplink data transmission, but directly uses a physical antenna port specified in the communications protocol, to perform uplink data transmission. This is not limited herein.

S303: The network device sends downlink control information to the terminal device.

S304: The terminal device determines antenna selection indication information based on the downlink control information received from the network device.

In some feasible implementations, the network device may determine, based on the antenna selection manner of the terminal device, antenna indication information for indicating one or more antennas used by the terminal device for uplink transmission. The antenna selection manner of the terminal device may include how many physical antennas are selected as transmit antennas for uplink transmission, may further include which physical antenna or physical antennas are selected as transmit antennas for uplink transmission, and so on. For example, assuming that the terminal device supports 1T4R, that the network device may determine, based on capability information or uplink transmission mode of the terminal device, a transmit antenna selection manner of the terminal device may be selecting, as a transmit antenna, one physical antenna from four physical antennas, or may be selecting, as a transmit antenna, a specific physical antenna from the four physical antennas. Alternatively, assuming that the terminal device supports 2T4R, that the network device may determine, based on capability information or an uplink transmission mode of the terminal device, a transmit antenna selection manner of the terminal device may be selecting, as a transmit antenna or transmit antennas, one or two physical antennas from four physical antennas, may be selecting, as a transmit antenna or transmit antennas, one or two specific physical antennas from the four physical antennas, or the like. By analogy, assuming that when the terminal device has a capability of supporting 1T8R or 2T8R, the network device may also determine, based on the capability information or the uplink transmission mode of the terminal device, an antenna selection manner that matches the capability of the terminal device. A quantity of selected antennas is not limited in this embodiment of this application.

In some feasible implementations, the network device may determine, based on the capability information or the uplink transmission mode of the terminal device, the antenna selection manner used when the terminal device selects the transmit antenna, and may further configure the corresponding antenna selection indication information based on the determined antenna selection manner. The antenna selection indication information may be used to indicate a physical antenna or physical antennas selected by the terminal device, as the transmit antenna or the transmit antennas for uplink transmission, from a plurality of physical antennas configured for the terminal device. A correspondence between the antenna selection indication information and one or more physical antennas may be specified in the communications protocol, or may be configured by the network device. A specific correspondence may be determined based on an actual application scenario. This is not limited herein. For ease of description, the one or more physical antennas selected by the terminal device from the plurality of physical antennas configured for the terminal device may also be referred to as one or more first antennas. In other words, in this embodiment of this application, the first antenna represents a physical antenna used by the terminal device for uplink transmission. There may be one or more first antennas. This is not limited herein. For example, when the terminal device supports 1T4R, after the network device determines, based on the capability information or the uplink transmission mode of the terminal device, that the transmit antenna selection manner of the terminal device may be selecting, as a transmit antenna, one physical antenna from four physical antennas, or may be selecting, as a transmit antenna, a specific physical antenna from four physical antennas, the network device may configure antenna selection indication information used to indicate a physical antenna or physical antennas selected by the terminal device, as a transmit antenna or transmit antennas, from the four physical antennas configured for the terminal device.

In some feasible implementations, the network device may generate the downlink control information (downlink control information, DCI), and send the DCI to the terminal device. The network device may send the antenna selection indication information to the terminal device by sending the DCI to the terminal device. The terminal device may receive the DCI from the network device, obtain the antenna selection indication information corresponding to the DCI, and send the information to the network device based on the one or more first antennas indicated by using the antenna selection indication information. Implementations in which the network device sends the DCI to the terminal device, and sends the antenna selection indication information to the terminal device by sending the DCI include but are not limited to an implementation 1 to an implementation 5 below, or any combination of an implementation 1 to an implementation 5. The following describes the implementation 1 to the implementation 5 with reference to capabilities of the terminal device in different application scenarios.

### Implementation 1:

In some feasible implementations, based on a feature that error detection is performed on the DCI based on a cyclic redundancy check (cyclic redundancy check, CRC), the network device may scramble a CRC parity bit carried in the DCI sent to the terminal device, and indicate the antenna selection manner to the terminal device by using a mask used to scramble the CRC of the DCI. When the terminal device does not support antenna selection for uplink transmission or does not apply antenna selection for uplink transmission, after the network device adds the CRC parity bit to the DCI sent to the terminal device, the CRC parity bit may be scrambled by using a corresponding radio network temporary identifier (radio network temporary identity, RNTI) (for example, *x*_{*rnti*,0}*,x*_{*rnti,*1},...,*x*_{*rnti*,15}), to obtain a scrambled sequence *c*₀,*c*₁*,c*₂,*c*₃,...,*c*_{*B*-1}. B=A+L, A is a physical downlink control channel (physical downlink control channel, PDCCH) payload size, and L is a quantity of CRC parity bits (A is the PDCCH payload size and L is the number of parity bits, refer to 5.3.3.2 CRC attachment in the protocol 36.212).

When the terminal device supports antenna selection for uplink transmission or the terminal device applies antenna selection for uplink transmission, after the network device adds the CRC parity bit to the DCI sent to the terminal device, the CRC parity bit may be scrambled by using a corresponding RNTI (for example, *x*_{*rnti*,0}*,x*_{*rnti,*1},...,*x*_{*rnti*,15}) and a mask (mask) (for example, *x*_{*AS*,0}, *x*_{*AS,*1},...,*x*_{*AS*,15}), to obtain a scrambled sequence (refer to 5.3.3.2 CRC attachment in 3GPP TS 36.212). It may be understood that, the mask used to scramble the CRC parity bit of the DCI herein may be referred to as a CRC mask for short, or may be referred to as a CRC mask of the DCI. The antenna selection manner may be indicated to the terminal device by using the CRC mask. Therefore, in this implementation, the CRC mask may be used as the antenna selection indication information. In other words, the antenna selection indication information that corresponds to the DCI and that is obtained by the terminal device from the DCI sent by the network device may be represented by using the CRC mask of the DCI. The network device may determine, based on the antenna selection manner of the terminal device, one or more antennas that are in the plurality of physical antennas of the terminal device and that are used for uplink transmission, to determine a mask corresponding to the one or more antennas used for uplink transmission. The network device may scramble, by using the mask and a corresponding RNTI, the CRC of the generated DCI used to schedule the terminal device, and send the scrambled DCI to the terminal device, to indicate, to the terminal device by using the CRC mask of the DCI, one or more physical antennas used for uplink transmission. For ease of description, the CRC mask used as the antenna selection indication information may also be referred to as an antenna selection mask (antenna selection mask) or a mask (mask). This may be specifically determined based on a requirement of an actual application scenario. This is not limited herein.

In some feasible implementations, when the terminal device supports 1T4R, the network device may indicate, by using four groups of different antenna selection masks, the terminal device to select, as transmit antennas, different physical antennas from four physical antennas. For ease of description, the following may describe, in a form of a table, a correspondence between antenna selection masks and physical antennas indicated by the antenna selection masks. During specific implementation, the correspondence between the antenna selection masks and the physical antennas indicated by the antenna selection masks may alternatively be represented in any other representation form other than the table. A specific form may be determined based on a requirement of an actual application scenario. This is not limited herein.

Table 1 is a table of a correspondence between antenna selection masks and physical antenna ports for transmit antenna selection. Different physical antenna ports may be used to identify different physical antennas. One group of antenna selection masks may correspondingly indicate one physical antenna port. The correspondence between the antenna selection masks and the physical antenna ports for transmit antenna selection may be specified in the communications protocol, or may be configured by the network device. Details are not described below again.

**Table 1**

| Physical antenna port | Antenna selection mask |
|---|---|
| | <*x*_{*AS*,0}, *x*_{*AS,*1},...,*x*_{*AS*,15}> |
| Port 0 | <0, 0, 0, 0, 0, 0, 0, 0, 0, 0, 0, 0, 0, 0, 0, 0> |
| Port 1 | <0, 0, 0, 0, 0, 0, 0, 0, 0, 0, 0, 0, 0, 0, 0, 1> |
| Port 2 | <0, 0, 0, 0, 0, 0, 0, 0, 0, 0, 0, 0, 0, 0, 1, 0> |
| Port 3 | <0, 0, 0, 0, 0, 0, 0, 0, 0, 0, 0, 0, 0, 1, 0, 0> |

As shown in Table 1 above, when the terminal device supports 1T4R, the antenna selection mask <0, 0, 0, 0, 0, 0, 0, 0, 0, 0, 0, 0, 0, 0, 0, 0> may be used to indicate that a physical antenna (assumed to be a physical antenna 0 or TX 0) whose physical antenna port is the port 0 and that is in four physical antennas of the terminal device is the first antenna. The first antenna may represent a transmit antenna that is selected from the four physical antennas of the terminal device and that is used to send information to the network device. Details are not described below again. Likewise, the antenna selection mask <0, 0, 0, 0, 0, 0, 0, 0, 0, 0, 0, 0, 0, 1, 0, 0> may be used to indicate that a physical antenna (assumed to be a physical antenna 3 or TX 3) whose physical antenna port is the port 3 and that is in the four physical antennas of the terminal device is the first antenna. By analogy, different antenna selection masks may be used to indicate that different physical antennas in the four physical antennas of the terminal device are first antennas.

Optionally, when the terminal device supports 1T4R, the network device may further indicate, by using four groups of different antenna selection masks shown in Table 2 below, the terminal device to select, as transmit antennas, different physical antennas from the four physical antennas. Table 2 is another table of a correspondence between antenna selection masks and physical antenna ports for transmit antenna selection.

**Table 2**

| Physical antenna port | Antenna selection mask |
|---|---|
| | <*x*_{*AS*,0}, *x*_{*AS,*1},...,*x*_{*AS*,15}> |
| Port 0 | <0, 0, 0, 0, 0, 0, 0, 0, 0, 0, 0, 0, 0, 0, 0, 0> |
| Port 1 | <0, 0, 0, 0, 0, 0, 0, 0, 0, 0, 0, 0, 0, 0, 0, 1> |
| Port 2 | <0, 0, 0, 0, 0, 0, 0, 0, 0, 0, 0, 0, 0, 0, 1, 0> |
| Port 3 | <0, 0, 0, 0, 0, 0, 0, 0, 0, 0, 0, 0, 0, 0, 1, 1> |

Likewise, as shown in Table 2 above, when the terminal device supports 1T4R, the antenna selection mask <0, 0, 0, 0, 0, 0, 0, 0, 0, 0, 0, 0, 0, 0, 0, 0> may be used to indicate that a physical antenna whose physical antenna port is the port 0 and that is in four physical antennas of the terminal device is the first antenna. The antenna selection mask <0, 0, 0, 0, 0, 0, 0, 0, 0, 0, 0, 0, 0, 0, 1, 1> may be used to indicate that a physical antenna whose physical antenna port is the port 3 and that is in four physical antennas of the terminal device is the first antenna. By analogy, different antenna selection masks may be used to indicate that different physical antennas in the four physical antennas of the terminal device are first antennas.

In some feasible implementations, when the terminal device supports 1T8R, the network device may indicate, by using eight groups of different antenna selection masks, the terminal device to select, as transmit antennas, different physical antennas from eight physical antennas. The network device may further indicate, by using eight groups of different antenna selection masks shown in Table 3 and Table 4 below, the terminal device to select, as transmit antennas, different physical antennas from the eight physical antennas. Table 3 is another table of a correspondence between antenna selection masks and physical antenna ports for transmit antenna selection.

**Table 3**

| Physical antenna port | Antenna selection mask |
|---|---|
| | <*x*_{*AS*,0}, *x*_{*AS,*1},...,*x*_{*AS*,15}> |
| UE port 0 | <0, 0, 0, 0, 0, 0, 0, 0, 0, 0, 0, 0, 0, 0, 0, 0> |
| UE port 1 | <0, 0, 0, 0, 0, 0, 0, 0, 0, 0, 0, 0, 0, 0, 0, 1> |
| UE port 2 | <0, 0, 0, 0, 0, 0, 0, 0, 0, 0, 0, 0, 0, 0, 1, 0> |
| UE port 3 | <0, 0, 0, 0, 0, 0, 0, 0, 0, 0, 0, 0, 0, 1, 0, 0> |
| UE port 4 | <0, 0, 0, 0, 0, 0, 0, 0, 0, 0, 0, 0, 1, 0, 0, 0> |
| UE port 5 | <0, 0, 0, 0, 0, 0, 0, 0, 0, 0, 0, 1, 0, 0, 0, 0> |
| UE port 6 | <0, 0, 0, 0, 0, 0, 0, 0, 0, 0, 1, 0, 0, 0, 0, 0> |
| UE port 7 | <0, 0, 0, 0, 0, 0, 0, 0, 0, 1, 0, 0, 0, 0, 0, 0> |

Likewise, as shown in Table 3 above, when the terminal device supports 1T8R, the antenna selection mask <0, 0, 0, 0, 0, 0, 0, 0, 0, 0, 0, 0, 0, 0, 0, 0> may be used to indicate that a physical antenna whose physical antenna port is the port 0 and that is in eight physical antennas of the terminal device is the first antenna. The antenna selection mask <0, 0, 0, 0, 0, 0, 0, 0, 0, 1, 0, 0, 0, 0, 0, 0> may be used to indicate that a physical antenna whose physical antenna port is the port 7 and that is in the eight physical antennas of the terminal device is the first antenna. By analogy, different antenna selection masks may be used to indicate that different physical antennas in the eight physical antennas of the terminal device are first antennas.

Table 4 is another table of a correspondence between antenna selection masks and physical antenna ports for transmit antenna selection.

**Table 4**

| Physical antenna port | Antenna selection mask |
|---|---|
| | <*x*_{*AS*,0}, *x*_{*AS,*1},...,*x*_{*AS*,15}> |
| UE port 0 | <0, 0, 0, 0, 0, 0, 0, 0, 0, 0, 0, 0, 0, 0, 0, 0> |
| UE port 1 | <0, 0, 0, 0, 0, 0, 0, 0, 0, 0, 0, 0, 0, 0, 0, 1> |
| UE port 2 | <0, 0, 0, 0, 0, 0, 0, 0, 0, 0, 0, 0, 0, 0, 1, 0> |
| UE port 3 | <0, 0, 0, 0, 0, 0, 0, 0, 0, 0, 0, 0, 0, 0, 1, 1> |
| UE port 4 | <0, 0, 0, 0, 0, 0, 0, 0, 0, 0, 0, 0, 0, 1, 0, 0> |
| UE port 5 | <0, 0, 0, 0, 0, 0, 0, 0, 0, 0, 0, 0, 0, 1, 0, 1> |
| UE port 6 | <0, 0, 0, 0, 0, 0, 0, 0, 0, 0, 0, 0, 0, 1, 1, 0> |
| UE port 7 | <0, 0, 0, 0, 0, 0, 0, 0, 0, 0, 0, 0, 0, 1, 1, 1> |

Likewise, as shown in Table 4 above, when the terminal device supports 1T8R, the antenna selection mask <0, 0, 0, 0, 0, 0, 0, 0, 0, 0, 0, 0, 0, 0, 0, 0> may be used to indicate that a physical antenna whose physical antenna port is the port 0 and that is in eight physical antennas of the terminal device is the first antenna. The antenna selection mask <0, 0, 0, 0, 0, 0, 0, 0, 0, 0, 0, 0, 0, 1, 1, 1> may be used to indicate that a physical antenna whose physical antenna port is the port 7 and that is in the eight physical antennas of the terminal device is the first antenna. By analogy, different antenna selection masks may be used to indicate that different physical antennas in the eight physical antennas of the terminal device are first antennas.

In some feasible implementations, when the terminal device supports 2T4R, the network device may indicate, by using four groups of different antenna selection masks, the terminal device to select, as transmit antennas, different physical antennas from four physical antennas. The network device may further indicate, by using four groups of different antenna selection masks shown in Table 5 below, the terminal device to select, as transmit antennas, two different physical antennas from the eight physical antennas. Table 5 is another table of a correspondence between antenna selection masks and physical antenna ports for transmit antenna selection.

**Table 5**

| Physical antenna port | Antenna selection mask |
|---|---|
| | <*x*_{*AS*,0}, *x*_{*AS,*1},...,*x*_{*AS*,15}> |
| UE port {0, 1} | <0, 0, 0, 0, 0, 0, 0, 0, 0, 0, 0, 0, 0, 0, 0, 0> |
| UE port {0, 3} | <0, 0, 0, 0, 0, 0, 0, 0, 0, 0, 0, 0, 0, 0, 0, 1> |
| UE port {2, 3} | <0, 0, 0, 0, 0, 0, 0, 0, 0, 0, 0, 0, 0, 0, 1, 0> |
| UE port {1, 3} | <0, 0, 0, 0, 0, 0, 0, 0, 0, 0, 0, 0, 0, 0, 1, 1> |

Likewise, as shown in Table 5 above, when the terminal device supports 2T4R, the antenna selection mask <0, 0, 0, 0, 0, 0, 0, 0, 0, 0, 0, 0, 0, 0, 0, 0> may be used to indicate that two physical antennas whose physical antenna ports are the port 0 and the port 1 and that are in four physical antennas of the terminal device are first antennas. The antenna selection mask <0, 0, 0, 0, 0, 0, 0, 0, 0, 0, 0, 0, 0, 0, 0, 1> may be used to indicate that two physical antennas whose physical antenna ports are the port 0 and the port 3 and that are in the four physical antennas of the terminal device are first antennas. By analogy, different antenna selection masks may be used to indicate that two different physical antennas in the four physical antennas of the terminal device are first antennas.

Optionally, in some feasible implementations, physical antennas on a terminal device side may be grouped in advance, and one antenna group includes at least one physical antenna. After the physical antennas on the terminal device side are grouped into a plurality of antenna groups, the antenna group of the terminal device may alternatively be indicated by using an antenna selection mask, so that the antenna included in the antenna group may be determined as the first antenna. Optionally, the antenna groups on the terminal device side may be specified in the communications protocol (the following grouping manner 1), may be indicated by the network device (the following grouping manner 2), or may be determined in more other grouping manners. Alternatively, one or a combination of the grouping manner 1, the grouping manner 2, and the more other grouping manners may be used. A specific grouping manner may be determined based on an actual application scenario. This is not limited herein. The following uses the grouping manner 1 and the grouping manner 2 as examples for description.

### Grouping manner 1:

In some feasible implementations, when the terminal device supports 1T2R, 1T4R, 1T8R, 2T4R, 2T8R, or the like, it may be determined that there are two, four, or eight physical antennas or the like on the terminal device side. Two, four, or eight physical antennas of the terminal device may be grouped into one or more antenna groups in a predefined grouping rule such as a specification in the communications protocol. For ease of description, when the terminal device supports 2R (for example, 1T2R), an antenna configuration of the terminal device may be referred to as 2R for short. Likewise, when the terminal device supports 4R (for example, 1T4R or 2T4R), the antenna configuration of the terminal device may be referred to as 4R for short. When the terminal device supports 8R (for example, 1T8R or 2T8R), the antenna configuration of the terminal device may be referred to as 8R for short.

Optionally, when the antenna configuration of the terminal device is 4R, it is assumed that physical antenna port numbers of four physical antennas of the terminal device are 0, 1, 2, and 3 (which may be correspondingly marked as a port 0, a port 1, a port 2, and a port 3, and details are not described again in the following similar implementations). The four physical antennas of the terminal device may be grouped into six antenna groups in a predefined grouping rule such as a specification in the communications protocol. For example, the foregoing six antenna groups may be {0, 1}, {0, 2}, {0, 3}, {1, 2}, {1, 3}, and {2, 3}.

Optionally, when the antenna configuration of the terminal device is 4R, it is assumed that physical antenna port numbers of four physical antennas of the terminal device are 0, 1, 2, and 3. The four physical antennas of the terminal device may be grouped into four antenna groups in a predefined grouping rule such as a specification in the communications protocol. For example, the foregoing four antenna groups may be {0, 1, 2}, {0, 1, 3}, {0, 2, 3}, and {1, 2, 3}.

Optionally, when the antenna configuration of the terminal device is 4R, it is assumed that physical antenna port numbers of four physical antennas of the terminal device are 0, 1, 2, and 3. The four physical antennas of the terminal device may be grouped into 11 antenna groups in a predefined grouping rule such as a specification in the communications protocol. For example, the 11 antenna groups may be {0}, {1}, {0, 1}, {0, 2}, {0, 3}, {1, 2}, {1, 3}, {2, 3}, {0, 1, 2}, {0, 1, 3}, and {0, 2, 3}.

Likewise, optionally, when the antenna configuration of the terminal device is 8R, it is assumed that physical antenna port numbers of eight physical antennas of the terminal device are 0, 1, 2, 3, 4, 5, 6, and 7. The eight physical antennas of the terminal device may be grouped into 28 antenna groups in a predefined grouping rule such as a specification in the communications protocol. For example, the 28 antenna groups may be {0, 1}, {0, 2}, {0, 3}, {0, 4}, {0, 5}, {0, 6}, {0, 7}, {1, 2}, {1, 3}, {1, 4}, {1, 5}, {1, 6}, {1, 7}, {2, 3}, {2, 4}, {2, 5}, {2, 6}, {2, 7}, {3, 4}, {3, 5}, {3, 6}, {3, 7}, {4, 5}, {4, 6}, {4, 7}, {5, 6}, {5, 7}, and {6, 7}.

The foregoing grouping manners of the physical antennas of the terminal device are merely examples, but are not exhaustive, and include but are not limited to the foregoing grouping manners. A specific grouping manner may be determined based on a requirement of an actual application scenario. This is not limited herein.

Optionally, in some feasible implementations, after the physical antennas on the terminal device side are grouped into the plurality of antenna groups in the predefined grouping rule such as the specification in the communications protocol, the terminal device may further report antenna group indication information to the network device. After receiving the antenna grouping indication information from the terminal device, the network device may determine an antenna grouping manner of the physical antennas of the terminal device based on the indication information, to indicate a transmit antenna selection manner to the terminal device by using, for example, an antenna selection mask.

### Grouping manner 2:

In some feasible implementations, the grouping manner of the antenna groups on the terminal device side may alternatively be determined based on indication information delivered by the network device. The network device may send indication information of the antenna grouping manner to the terminal device by using higher layer signaling. The terminal device may receive the higher layer signaling from the network device, and determine the antenna grouping manner based on the indication information included in the higher layer signaling. The higher layer signaling may include radio resource control (radio resource control, RRC) signaling, media access control (media access control, MAC) control element (control element, CE) signaling, and/or the like. This is not limited herein.

Optionally, when an antenna configuration of the terminal device is 4R, it is assumed that physical antenna port numbers of four physical antennas of the terminal device are 0, 1, 2, and 3. The network device may directly deliver the indication information by using the higher layer signaling, to indicate that the antenna groups of the physical antennas of the terminal device are {0, 1}, {0, 2}, {0, 3}, {1, 2}, {1, 3}, and {2, 3}. In other words, the network device may directly indicate, by using the higher layer signaling, a physical antenna port number of a physical antenna included in each of the physical antenna groups of the terminal device. After receiving the higher layer signaling from the network device, the terminal device may determine, based on the indication information included in the higher layer signaling, that the antenna grouping manner of the physical antennas of the terminal device is {0, 1}, {0, 2}, {0, 3}, {1, 2}, {1, 3 }, and {2, 3}. To be specific, the four physical antennas of the terminal device may be combined in pairs to obtain the six antenna groups.

For example, when the antenna configuration of the terminal device is 4R, it is assumed that the physical antenna port numbers of the four physical antennas of the terminal device are 0, 1, 2, and 3. The network device may directly deliver the indication information by using the higher layer signaling, to indicate that the antenna groups of the physical antennas of the terminal device are {0, 1, 2}, {0, 1, 3}, {0, 2, 3}, and {1, 2, 3}. To be specific, the four physical antennas of the terminal device may be combined by grouping three physical antennas into a group, to obtain the four antenna groups.

The antenna grouping manners indicated by the indication information delivered by the network device by using the higher layer signaling are merely examples, but are not exhaustive, and include but are not limited to the foregoing grouping manners. A specific grouping manner may be determined based on a requirement of an actual application scenario. This is not limited herein.

Optionally, when the terminal device supports 2T4R, it is assumed that four physical antennas of the terminal device are grouped into six antenna groups according to a predefined grouping rule such as a specification in the communications protocol, or the indication information delivered by using the higher layer signaling of the network device is used to indicate that four physical antennas are grouped into six antenna groups. For example, the six antenna groups are {0, 1}, {0, 2}, {0, 3}, {1, 2}, {1, 3}, and {2, 3}. For ease of description, the foregoing six antenna groups may be marked by using a port group 0, a port group 1, a port group 2, a port group 3, a port group 4, and a port group 5. The network device may indicate different antenna groups in the foregoing six antenna groups by using six groups of different antenna selection masks. The terminal device may determine a corresponding antenna group in the six antenna groups based on a correspondence between the six groups of different antenna selection masks and the six antenna groups, thereby determining, as a transmit antenna or transmit antennas for uplink transmission, one or more physical antennas included in the antenna group. Table 6 below is a table of a correspondence between antenna selection masks and antenna groups selected through transmit antenna selection. One group of antenna selection masks may correspondingly indicate one antenna group. The correspondence between the antenna selection masks and the antenna groups may be specified in a communications protocol, or may be configured by the network device. Details are not described below again.

**Table 6**

| Antenna group | Antenna selection mask |
|---|---|
| | <*x*_{*AS*,0}, *x*_{*AS,*1},...,*x*_{*AS*,15}> |
| Port group 0 | <0, 0, 0, 0, 0, 0, 0, 0, 0, 0, 0, 0, 0, 0, 0, 0> |
| Port group 1 | <0, 0, 0, 0, 0, 0, 0, 0, 0, 0, 0, 0, 0, 0, 0, 1> |
| Port group 2 | <0, 0, 0, 0, 0, 0, 0, 0, 0, 0, 0, 0, 0, 0, 1, 0> |
| Port group 3 | <0, 0, 0, 0, 0, 0, 0, 0, 0, 0, 0, 0, 0, 1, 0, 0> |
| Port group 4 | <0, 0, 0, 0, 0, 0, 0, 0, 0, 0, 0, 0, 1, 0, 0, 0> |
| Port group 5 | <0, 0, 0, 0, 0, 0, 0, 0, 0, 0, 0, 1, 0, 0, 0, 0> |

As shown in Table 6 above, when the terminal device supports 2T4R, the antenna selection mask <0, 0, 0, 0, 0, 0, 0, 0, 0, 0, 0, 0, 0, 0, 0, 0> may be used to indicate the antenna group port group 0 in the six antenna groups of the terminal device. In this case, the antenna group port group 0 indicated by the antenna selection mask may be set as a first antenna group, and two physical antennas whose physical antenna port numbers are {0, 1} and that are included in the antenna group port group 0 may be determined as two first antennas whose physical antenna ports are a port 0 and a port 1. The antenna selection mask <0, 0, 0, 0, 0, 0, 0, 0, 0, 0, 0, 0, 0, 0, 0, 1> may be used to indicate the antenna group port group 1 in the six antenna groups of the terminal device. Likewise, in this case, the antenna group port group 1 indicated by the antenna selection mask may also be set as the first antenna group, and two physical antennas whose physical antenna port numbers are {0, 2} and that are included in the antenna group port group 0 may be determined as two first antennas whose physical antenna ports are a port 0 and a port 2. By analogy, one of the six antenna groups of the terminal device may be indicated by using different antenna selection masks, so that two physical antennas included in the antenna group may be determined as first antennas.

Table 7 below is another table of a correspondence between antenna selection masks and antenna groups selected through transmit antenna selection.

**Table 7**

| Antenna group | Antenna selection mask |
|---|---|
| | <*x*_{*AS*,0}, *x*_{*AS,*1},...,*x*_{*AS*,15}> |
| Port group 0 | <0, 0, 0, 0, 0, 0, 0, 0, 0, 0, 0, 0, 0, 0, 0, 0> |
| Port group 1 | <0, 0, 0, 0, 0, 0, 0, 0, 0, 0, 0, 0, 0, 0, 0, 1> |
| Port group 2 | <0, 0, 0, 0, 0, 0, 0, 0, 0, 0, 0, 0, 0, 0, 1, 0> |
| Port group 3 | <0, 0, 0, 0, 0, 0, 0, 0, 0, 0, 0, 0, 0, 0, 1, 1> |
| Port group 4 | <0, 0, 0, 0, 0, 0, 0, 0, 0, 0, 0, 0, 0, 1, 0, 0> |
| Port group 5 | <0, 0, 0, 0, 0, 0, 0, 0, 0, 0, 0, 0, 0, 1, 0, 1> |

Likewise, like the correspondence between the antenna selection masks and the antenna groups shown in Table 6 above, in the table of the correspondence between the antenna selection masks and the antenna groups selected through transmit antenna selection shown in Table 7, antenna selection masks in different representation forms may be used to indicate one of the six antenna groups of the terminal device, so that two physical antennas included in the antenna group may be determined as the first antennas. For details, refer to the corresponding descriptions in Table 6. Details are not described herein again.

Optionally, when the terminal device supports 2T4R, it is assumed that four physical antennas of the terminal device are grouped into four antenna groups according to a predefined grouping rule such as a specification in the communications protocol, or the indication information delivered by using the higher layer signaling of the network device is used to indicate that four physical antennas are grouped into four antenna groups. For example, the four antenna groups are {0, 1, 2}, {0, 1, 3}, {0, 2, 3}, and {1, 2, 3}. For ease of description, the foregoing four antenna groups may be marked by using a port group 0, a port group 1, a port group 2, and a port group 3. The network device may indicate different antenna groups in the foregoing four antenna groups by using four groups of different antenna selection masks. The terminal device may determine a corresponding antenna group in the four antenna groups based on a correspondence between the four groups of different antenna selection masks and the four antenna groups, thereby determining, as a transmit antenna or transmit antennas for uplink transmission, one or more physical antennas included in the antenna group. Table 8 below is another table of a correspondence between antenna selection masks and antenna groups selected through transmit antenna selection.

**Table 8**

| Antenna group | Antenna selection mask |
|---|---|
| | <*x*_{*AS*,0}, *x*_{*AS,*1},...,*x*_{*AS*,15}> |
| Port group 0 | <0, 0, 0, 0, 0, 0, 0, 0, 0, 0, 0, 0, 0, 0, 0, 0> |
| Port group 1 | <0, 0, 0, 0, 0, 0, 0, 0, 0, 0, 0, 0, 0, 0, 0, 1> |
| Port group 2 | <0, 0, 0, 0, 0, 0, 0, 0, 0, 0, 0, 0, 0, 0, 1, 0> |
| Port group 3 | <0, 0, 0, 0, 0, 0, 0, 0, 0, 0, 0, 0, 0, 0, 1, 1> |

As shown in Table 8 above, when the terminal device supports 2T4R, the antenna selection mask <0, 0, 0, 0, 0, 0, 0, 0, 0, 0, 0, 0, 0, 0, 0, 0> may be used to indicate the antenna group port group 0 in the four antenna groups of the terminal device. In this case, the antenna group port group 0 indicated by the antenna selection mask may be set as a first antenna group, and three physical antennas whose physical antenna port numbers are {0, 1, 2} and that are included in the antenna group port group 0 may be determined as three antennas whose physical antenna ports are a port 0, a port 1, and a port 2. In this case, because the terminal device supports 2T4R, to be specific, the terminal device only can support sending using two physical antennas, and cannot support sending using three physical antennas, the network device indicates the antenna group port group 0 in the four antenna groups of the terminal device by using the antenna selection mask <0, 0, 0, 0, 0, 0, 0, 0, 0, 0, 0, 0, 0, 0, 0, 0>, and any two of three antennas whose physical antenna ports are a port 0, a port 1, and a port 2 and that are in the port group 0 may be selected as first antennas. The terminal device determines, by using the antenna selection mask, that the antenna group supported by the network device is the port group 0, thereby selecting, as transmit antennas, any two physical antennas from antennas whose physical antenna ports are the port 0, the port 1, and the port 2 and that are in the port group 0, to send information to the network device. Likewise, the antenna selection mask <0, 0, 0, 0, 0, 0, 0, 0, 0, 0, 0, 0, 0, 0, 0, 1> may be used to indicate the antenna group port group 1 in the four antenna groups of the terminal device. Likewise, in this case, the antenna group port group 1 indicated by the antenna selection mask may alternatively be set as the first antenna group, and three physical antennas whose physical antenna port numbers are {0, 1, 3} and that are included in the antenna group port group 1 may be determined as three physical antennas whose physical antenna ports are a port 0, a port 1, and a port 3. The terminal device may select, as first antennas, any two physical antennas from three physical antennas whose physical antenna ports are the port 0, the port 1, and the port 3. By analogy, one of the four antenna groups of the terminal device may be indicated by using different antenna selection masks, so that one or more physical antennas included in the antenna group may be determined as the first antenna.

In this embodiment of this application, the network device may use the antenna selection mask (that is, the CRC mask of the DCI) as the antenna selection indication information, and deliver the antenna selection indication information to the terminal device by sending the DCI to the terminal device. The terminal device may receive the DCI from the network device, thereby determining the antenna selection indication information by using the CRC mask of the DCI, and using, as a transmit antenna, the antenna indicated by using the antenna selection indication information, so that selection of transmit antennas of different terminal devices having different capabilities can be supported. This is easy to operate and has high applicability.

### Implementation 2:

In some feasible implementations, the network device may alternatively represent, by using indication information (or referred to as bit information), of a specified bit (or referred to as a specific bit), in the DCI, the antenna selection indication information corresponding to the DCI, and deliver the antenna selection indication information to the terminal device by sending the DCI to the terminal device. It is assumed that the capability of the terminal device is supporting 1T4R, 1T8R, or the like. DCI that is sent by the network device and that is used to schedule the terminal device includes two bits (that is, specified bits), and values of the two bits may be 00, 01, 10, and 11. Herein, two bits are merely an example. One bit or more bits may be specifically selected based on an actual application scenario. This is not limited herein. Different values may be used as indication information for indicating different physical antennas and/or different antenna groups. The network device may obtain the antenna selection indication information by configuring the values of the two bits. After determining the values of the two bits, the network device may generate the DCI used to schedule the terminal device. The DCI may include bit values corresponding to the one or more antennas used by the terminal device for uplink transmission, for example, the values of the two bits. The network device may encode the DCI that includes the antenna selection indication information represented by using the values of the two bits, and send the DCI to the terminal device. The terminal device may receive the DCI from the network device, thereby decoding the DCI to obtain the values, of the two bits, included in the DCI, to determine the antenna selection indication information. For example, when the terminal device supports 1T4R, the network device may indicate, by using 2-bit "antenna selection indication information" in DCI for scheduling the terminal device, a physical antenna port currently used by the terminal device to send uplink information to the network device. For example, it is assumed that physical antenna port numbers of four physical antennas of the terminal device are 0, 1, 2, and 3. If the value, of the two bits, in the DCI is 00 (which indicates 2-bit "antenna selection indication information" in the DCI is 00), it indicates that a physical antenna port of a physical antenna indicated by using the 2-bit antenna selection indication information in the DCI is 0. After receiving the DCI from the network device, the terminal device may determine, based on the 2-bit antenna selection indication information in the DCI, to select, as a transmit antenna from the four physical antennas, one physical antenna whose physical antenna port is 0. Likewise, if the 2-bit "antenna selection indication information" in the DCI is 01, it indicates that the physical antenna port of the physical antenna indicated by using the 2-bit antenna selection indication information in the DCI is 1. After receiving the DCI from the network device, the terminal device may determine, based on the 2-bit antenna selection indication information in the DCI, to select, as a transmit antenna from the four physical antennas, one physical antenna whose physical antenna port is 1. If the 2-bit "antenna selection indication information" in the DCI is 10, it indicates that the physical antenna port of the physical antenna indicated by using the 2-bit antenna selection indication information in the DCI is 2. After receiving the DCI from the network device, the terminal device may determine, based on the 2-bit antenna selection indication information in the DCI, to select, as a transmit antenna from the four physical antennas, one physical antenna whose physical antenna port is 2. If the 2-bit "antenna selection indication information" in the DCI is 11, it indicates that the physical antenna port of the physical antenna indicated by using the 2-bit antenna selection indication information in the DCI is 3. After receiving the DCI from the network device, the terminal device may determine, based on the 2-bit antenna selection indication information in the DCI, to select, as a transmit antenna from the four physical antennas, one physical antenna whose physical antenna port is 3. Table 9 below is a table of a correspondence between indication information in the DCI and physical antenna ports. During specific implementation, a correspondence between the indication information, of the specified bit, in the DCI and physical antennas indicated by using the indication information may alternatively be represented in any other representation form other than the table. A specific form may be determined based on a requirement of an actual application scenario. This is not limited herein. The correspondence between the indication information, of the specified bit, in the DCI and physical antenna ports for transmit antenna selection may be specified in a communications protocol, or may be configured by the network device. Details are not described below.

**Table 9**

| Physical antenna port | Indication information (two bits) |
|---|---|
| Port 0 | 00 |
| Port 1 | 01 |
| Port 2 | 10 |
| Port 3 | 11 |

In some feasible implementations, 2-bit antenna selection indication information in the DCI may also be used to indicate an antenna group of the terminal device. For example, if the 2-bit "antenna selection indication information" in the DCI is 00, it indicates that an antenna group of a physical antenna that is indicated by using the 2-bit antenna selection indication information in the DCI is a port group 0. After receiving the DCI from the network device, the terminal device may determine, based on the 2-bit antenna selection indication information in the DCI, that the port group 0 is selected from a plurality of antenna groups, thereby determining, as a transmit antenna used to send information to the network device, one of physical antennas included in the port group 0. Likewise, if the 2-bit "antenna selection indication information" in the DCI is 01, it indicates that an antenna group of a physical antenna that is indicated by using the 2-bit antenna selection indication information in the DCI is a port group 1. After receiving the DCI from the network device, the terminal device may determine, based on the 2-bit antenna selection indication information in the DCI, that the port group 1 is selected from a plurality of antenna groups, thereby determining, as a transmit antenna used to send information to the network device, one of physical antennas included in the port group 1. Table 10 below is a table of a correspondence between indication information in the DCI and antenna groups of physical antennas. During specific implementation, a correspondence between the indication information, of the specified bit, in the DCI and physical antenna groups indicated by using the indication information may alternatively be represented in any other representation form other than the table. A specific form may be determined based on a requirement of an actual application scenario. This is not limited herein.

**Table 10**

| Antenna group | Indication information (two bits) |
|---|---|
| Port group 0 | 00 |
| Port group 1 | 01 |
| Port group 2 | 10 |
| Port group 3 | 11 |

Likewise, when the terminal device supports 2TxR, the terminal device may alternatively be indicated, by using antenna selection indication information, of a specified bit, in the DCI, to select, as transmit antennas, two physical antennas from x physical antennas configured for the terminal device, or select one antenna group and use, as transmit antennas, two physical antennas in the antenna group. For details, refer to the implementation used when the terminal device supports 1TxR and the implementation provided in the foregoing implementation 1. Details are not described herein again. x may be 4, 8, or the like. This is not limited herein.

In this embodiment of this application, the network device may send the DCI to the terminal device, where the DCI sent to the terminal device includes 2-bit indication information, and a value, of the two bits, in the DCI may be used as the antenna selection indication information. The network device delivers the 2-bit antenna selection indication information specified in the DCI to the terminal device by sending the DCI to the terminal device. The terminal device may receive the DCI from the network device, thereby determining the antenna selection indication information based on a value of the 2-bit indication information in the DCI, and using an antenna indicated by using the antenna selection indication information as a transmit antenna to send uplink information. In this embodiment of this application, indication information, of specified bits such as 2 bits, in the DCI may be used to indicate the terminal device to select a transmit antenna, so that selection of transmit antennas of different terminal devices having different capabilities can be supported. In addition, no more control information and/or signaling transmission needs to be added, signaling overheads are low, reliability of uplink transmission of the terminal device is high, and applicability is strong.

### Implementation 3:

In some feasible implementations, the antenna selection indication information of the terminal device may alternatively be represented based on both indication information, of a specified bit, in the DCI sent by the network device to the terminal device and a CRC mask of the DCI. A correspondence between the antenna selection indication information represented by using both the indication information, of the specified bit, in the DCI and the CRC mask of the DCI and one or more first antennas of the terminal device may be specified in a communications protocol, or may be configured by the network device. This is not limited herein. The network device may generate DCI that includes indication information of a specified bit corresponding to one or more antennas used by the terminal device for uplink transmission, scramble CRC of the DCI by using a CRC mask corresponding to the one or more antennas, and send the scrambled DCI to the terminal device. The network device may send the indication information, of the specified bit, in the DCI and the CRC mask of the DCI, as the antenna selection indication information, to the terminal device by sending the DCI to the terminal device. Optionally, assuming that the terminal device supports 1TxR, antenna selection indication information for indicating one physical antenna selected by the terminal device, as a transmit antenna, from x physical antennas of the terminal device may be determined by using both 1-bit indication information in the DCI sent by the network device and the CRC mask of the DCI. Alternatively, the terminal device selects one antenna group from a plurality of antenna groups to which the x physical antennas of the terminal device belong, and uses any one of one or more physical antennas included in the antenna group as a transmit antenna.

Optionally, that the CRC mask of the DCI is <0, 0, 0, 0, 0, 0, 0, 0, 0, 0, 0, 0, 0, 0, 0, 0>, and the 1-bit indication information (namely, a value of the one bit) of the DCI is "0" may be the antenna selection indication information. For ease of description, antenna selection indication information 0 may be used as an example for description. The antenna selection indication information 0 may be used to indicate that a physical antenna whose physical antenna port is 0 and that is in the x physical antennas of the terminal device is a transmit antenna; and/or the antenna selection indication information 0 may be used to indicate a port group 0 in a plurality of antenna groups into which the x physical antennas of the terminal device are grouped, so that any one of one or more physical antennas included in the port group 0 may be determined as a transmit antenna configured to send information to the network device.

Optionally, that the CRC mask of the DCI is <0, 0, 0, 0, 0, 0, 0, 0, 0, 0, 0, 0, 0, 0, 0, 1>, and the 1-bit indication information of the DCI is "0" may be the antenna selection indication information. For ease of description, antenna selection indication information 1 may be used as an example for description. The antenna selection indication information 1 may be used to indicate that a physical antenna whose physical antenna port is 1 and that is in the x physical antennas of the terminal device is a transmit antenna; and/or the antenna selection indication information 1 may be used to indicate a port group 1 in a plurality of antenna groups into which the x physical antennas of the terminal device are grouped, so that any one of one or more physical antennas included in the port group 1 may be determined as a transmit antenna configured to send information to the network device.

Optionally, that the CRC mask of the DCI is <0, 0, 0, 0, 0, 0, 0, 0, 0, 0, 0, 0, 0, 0, 0, 0>, and the 1-bit indication information of the DCI is "1" may be the antenna selection indication information. For ease of description, antenna selection indication information 2 may be used as an example for description. The antenna selection indication information 2 may be used to indicate that a physical antenna whose physical antenna port is 2 and that is in the x physical antennas of the terminal device is a transmit antenna; and/or the antenna selection indication information 2 may be used to indicate a port group 2 in a plurality of antenna groups into which the x physical antennas of the terminal device are grouped, so that any one of the one or more physical antennas included in the port group 2 may be determined as a transmit antenna configured to send information to the network device.

Optionally, that the CRC mask of the DCI is <0, 0, 0, 0, 0, 0, 0, 0, 0, 0, 0, 0, 0, 0, 0, 1>, and the 1-bit indication information of the DCI is "1" may be the antenna selection indication information. For ease of description, antenna selection indication information 3 may be used as an example for description. The antenna selection indication information 3 may be used to indicate that a physical antenna whose physical antenna port is 3 and that is in the x physical antennas of the terminal device is a transmit antenna; and/or the antenna selection indication information 3 may be used to indicate a port group 3 in a plurality of antenna groups into which the x physical antennas of the terminal device are grouped, so that any one of the one or more physical antennas included in the port group 3 may be determined as a transmit antenna configured to send information to the network device.

In some feasible implementations, when the terminal device supports 2TxR, the indication information, of the specified bit, in the DCI and the CRC mask of the DCI may be used as the antenna selection indication information. The terminal device may receive the DCI from the network device, determine the antenna selection indication information based on both the 1-bit indication information in the DCI and the CRC mask of the DCI, and select, as transmit antennas based on the antenna selection indication information, two of x physical antennas configured for the terminal device, or select one antenna group, and use two physical antennas in the antenna group as transmit antennas. For details, refer to the implementation used when the terminal device supports 1TxR and the implementation provided in the foregoing implementation 1. Details are not described herein again. x may be 4, 8, or the like. This is not limited herein.

In this embodiment of this application, the network device may use the antenna selection mask (that is, the CRC mask of the DCI) and the indication information, of the specified bit, in the DCI as the antenna selection indication information for indicating the transmit antenna of the terminal device, and deliver the antenna selection indication information to the terminal device by sending the DCI to the terminal device. The terminal device may receive the DCI from the network device, thereby determining the antenna selection indication information based on the CRC mask of the DCI and indication information, of the specified bit, in the DCI, and selecting an antenna indicated by using the antenna selection indication information as a transmit antenna, to support selection of transmit antennas of different terminal devices having different capabilities, add a transmission form of the antenna selection indication information for indicating the transmit antenna of the terminal device, and improve processing flexibility of the antenna selection indication information of the terminal device.

### Implementation 4:

In some feasible implementations, the antenna selection indication information of the terminal device may be an odd/even number of a subframe in which the DCI sent by the network device to the terminal device is located and/or an odd/even number of a slot in which the DCI sent by the network device to the terminal device is located and a CRC mask of the DCI. The odd/even number of the subframe in which the DCI is located and/or the odd/even number of the slot in which the DCI is located may be identification information used to identify a time domain occupied by the DCI. In other words, when the network device sends the DCI to the terminal device, the identification information of the time domain occupied by the DCI may be used to represent the antenna selection indication information corresponding to the DCI. For ease of description, the following uses an example in which the odd/even number of the subframe in which the DCI is located is used as the identification information of the time domain occupied by the DCI, and an example in which the odd/even number of the subframe in which the DCI is located is used to represent the antenna selection indication information is used for description. A correspondence between the antenna selection indication information represented by using both the odd/even number of the subframe in which the DCI is located and the CRC mask of the DCI and one or more first antennas of the terminal device may be specified in a communications protocol, or may be configured by the network device. This is not limited herein. The network device may send, to the terminal device on a subframe corresponding to one or more antennas used by the terminal device for uplink transmission, DCI that is scrambled by using a CRC mask corresponding to the one or more antennas, and indicate a transmit antenna selection manner of the terminal device by using an odd/even number (namely, subframe identification information) of a subframe that carries the DCI and a CRC mask of the DCI. In this application scenario, the odd/even number of the subframe that carries the DCI and the CRC mask of the DCI are antenna selection indication information that indicates the terminal device to perform transmit antenna selection. The terminal device receives the DCI from the network device, thereby determining whether the subframe carrying the DCI is an odd-numbered subframe or an even-numbered subframe. The terminal device may further obtain the CRC mask from the DCI, thereby determining the transmit antenna selection manner with reference to a characteristic of the determined odd number or even number of the subframe. It is assumed that the terminal device supports 1TxR, antenna selection indication information for indicating one physical antenna selected by the terminal device, as a transmit antenna, from x physical antennas of the terminal device may be determined by using both the subframe odd/even number of the subframe in which the DCI sent by the network device is located and the CRC mask of the DCI. Alternatively, the terminal device selects one antenna group from a plurality of antenna groups to which x physical antennas of the terminal device belong, the antenna selection indication information for indicating to use any one of one or more physical antennas included in the antenna group as a transmit antenna may be determined by using both the subframe odd/even number of the subframe in which the DCI sent by the network device is located and the CRC mask of the DCI.

When the terminal supports 1TxR, the antenna selection indication information for indicating the transmit antenna of the terminal device may be the CRC mask of the DCI and an odd/even number of a subframe in which DCI is located when the network device sends the DCI to the terminal device. For example, that the CRC mask of the DCI is <0, 0, 0, 0, 0, 0, 0, 0, 0, 0, 0, 0, 0, 0, 0, 0>, and the subframe number of the subframe in which the DCI is located is an odd number may be antenna selection indication information. For ease of description, antenna selection indication information 0 may be used as an example for description. The antenna selection indication information 0 may be used to indicate that a physical antenna whose physical antenna port is 0 and that is in the x physical antennas of the terminal device is a transmit antenna; and/or the antenna selection indication information 0 may be used to indicate a port group 0 in a plurality of antenna groups into which the x physical antennas of the terminal device are grouped, so that any one of one or more physical antennas included in the port group 0 may be determined as a transmit antenna configured to send information to the network device.

Optionally, that the CRC mask of the DCI is <0, 0, 0, 0, 0, 0, 0, 0, 0, 0, 0, 0, 0, 0, 0, 1> and the subframe number of the subframe in which the DCI is located is an even number may be antenna selection indication information. For ease of description, antenna selection indication information 1 may be used as an example for description. The antenna selection indication information 1 may be used to indicate that a physical antenna whose physical antenna port is 1 and that is in the x physical antennas of the terminal device is a transmit antenna; and/or the antenna selection indication information 1 may be used to indicate a port group 1 in a plurality of antenna groups into which the x physical antennas of the terminal device are grouped, so that any one of one or more physical antennas included in the port group 1 may be determined as a transmit antenna configured to send information to the network device.

Optionally, that the CRC mask of the DCI is <0, 0, 0, 0, 0, 0, 0, 0, 0, 0, 0, 0, 0, 0, 0, 0> and the subframe number of the subframe in which the DCI is located is an odd number may be antenna selection indication information. For ease of description, antenna selection indication information 2 may be used as an example for description. The antenna selection indication information 2 may be used to indicate that a physical antenna whose physical antenna port is 2 and that is in the x physical antennas of the terminal device is a transmit antenna; and/or the antenna selection indication information 2 may be used to indicate a port group 2 in a plurality of antenna groups into which the x physical antennas of the terminal device are grouped, so that any one of the one or more physical antennas included in the port group 2 may be determined as a transmit antenna configured to send information to the network device.

Optionally, that the CRC mask of the DCI is <0, 0, 0, 0, 0, 0, 0, 0, 0, 0, 0, 0, 0, 0, 0, 1> and the subframe number of the subframe in which the DCI is located is an even number may be antenna selection indication information. For ease of description, antenna selection indication information 3 may be used as an example for description. The antenna selection indication information 3 may be used to indicate that a physical antenna whose physical antenna port is 3 and that is in the x physical antennas of the terminal device is a transmit antenna; and/or the antenna selection indication information 3 may be used to indicate a port group 3 in a plurality of antenna groups into which the x physical antennas of the terminal device are grouped, so that any one of the one or more physical antennas included in the port group 3 may be determined as a transmit antenna configured to send information to the network device.

In some feasible implementations, when the terminal device supports 2TxR, an odd/even number of a subframe in which the DCI is located and a CRC mask of the DCI may be used as the antenna selection indication information. The terminal device may receive the DCI from the network device, determine, based on both the odd/even number of the subframe in which the DCI is located and the CRC mask of the DCI, the antenna selection indication information for indicating the transmit antenna, and select, as transmit antennas based on the antenna selection indication information, two physical antennas from x physical antennas configured for the terminal device, or select one antenna group, and use two physical antennas in the antenna group as transmit antennas. For details, refer to the implementation used when the terminal device supports 1TxR and the implementation provided in the foregoing implementation 1. Details are not described herein again. x may be 4, 8, or the like. This is not limited herein.

In this embodiment of this application, the network device may indicate the transmit antenna selection manner to the terminal device by using the antenna selection mask (that is, the CRC mask of the DCI) and the odd/even-number feature of the subframe used for the DCI sent to the terminal device. The terminal device may obtain the antenna selection indication information by using the CRC mask of the DCI and the odd/even-number characteristic of the subframe in which the DCI received from the network device is located, and use an antenna indicated by using the antenna selection indication information as the transmit antenna. In this embodiment of this application, selection of transmit antennas of different terminal devices having different capabilities can be supported, a transmission form of the antenna selection indication information for indicating the transmit antenna of the terminal device is added, and processing flexibility of the antenna selection indication information of the terminal device is improved. In addition, it is easy to deliver an antenna selection manner indication, and a data processing amount is small, and data processing quality of the terminal device can be improved.

### Implementation 5:

In some feasible implementations, the antenna selection indication information of the terminal device may alternatively be represented based on both the indication information, of the specified bit, in the DCI sent by the network device to the terminal device and the odd/even number of the subframe in which the DCI is located. A correspondence between the antenna selection indication information represented by using both the indication information, of the specified bit, in the DCI and the odd/even number of the subframe in which the DCI is located and one or more first antennas of the terminal device may be specified in a communications protocol, or may be configured by the network device. This is not limited herein. The network device may send, to the terminal device on a subframe corresponding to one or more antennas used by the terminal device for uplink transmission, DCI that includes indication information of a specified bit corresponding to the one or more antennas, and indicate the transmit antenna selection manner of the terminal device to the terminal device by using both subframe identification information of an odd/even number of a subframe carrying the DCI and the indication information, of the specified bit, in the DCI. In this application scenario, the odd/even number of the subframe carrying the DCI and the indication information, of the specified bit, in the DCI may be antenna selection indication information. The terminal device receives the DCI from the network device, thereby determining whether the subframe carrying the DCI is an odd-numbered subframe or an even-numbered subframe. The terminal device may further obtain the indication information of the specified bit from the DCI, thereby determining the transmit antenna selection manner with reference to a characteristic of the determined odd number or even number of the subframe. It is assumed that the terminal device supports 1TxR, antenna selection indication information for indicating one physical antenna selected by the terminal device, as a transmit antenna, from x physical antennas of the terminal device may be determined by using both 1-bit indication information in the DCI sent by the network device and the subframe identification information of the odd/even number of the subframe carrying the DCI. Alternatively, the terminal device selects one antenna group from a plurality of antenna groups to which x physical antennas of the terminal device belong, the antenna selection indication information for indicating to use any one of one or more physical antennas included in the antenna group as a transmit antenna may be determined by using both the subframe odd/even number of the subframe in which the DCI sent by the network device is located and the 1-bit indication information of the DCI.

Optionally, when the terminal supports 1TxR, the antenna selection indication information for indicating the transmit antenna of the terminal device may be determined based on both the 1-bit indication information in the DCI and the odd/even number of the subframe in which the DCI sent by the network device to the terminal device is located. For example, that the 1-bit indication information in the DCI is "0", and the subframe number of the subframe in which the DCI is located is an odd number may be antenna selection indication information. For ease of description, antenna selection indication information 0 may be used as an example for description. The antenna selection indication information 0 may be used to indicate that a physical antenna whose physical antenna port is 0 and that is in the x physical antennas of the terminal device is a transmit antenna; and/or the antenna selection indication information 0 may be used to indicate a port group 0 in a plurality of antenna groups into which the x physical antennas of the terminal device are grouped, so that any one of one or more physical antennas included in the port group 0 may be determined as a transmit antenna configured to send information to the network device.

Optionally, that the 1-bit indication information in the DCI is "0", and a subframe number of a subframe in which the DCI is located is an even number may be antenna selection indication information. For ease of description, antenna selection indication information 1 may be used as an example for description. The antenna selection indication information 1 may be used to indicate that a physical antenna whose physical antenna port is 1 and that is in the x physical antennas of the terminal device is a transmit antenna; and/or the antenna selection indication information 1 may be used to indicate a port group 1 in a plurality of antenna groups into which the x physical antennas of the terminal device are grouped, so that any one of one or more physical antennas included in the port group 1 may be determined as a transmit antenna configured to send information to the network device.

Optionally, that the 1-bit indication information in the DCI is "1", and a subframe number of a subframe in which the DCI is located is an odd number may be antenna selection indication information. For ease of description, antenna selection indication information 2 may be used as an example for description. The antenna selection indication information 2 may be used to indicate that a physical antenna whose physical antenna port is 2 and that is in the x physical antennas of the terminal device is a transmit antenna; and/or the antenna selection indication information 2 may be used to indicate a port group 2 in a plurality of antenna groups into which the x physical antennas of the terminal device are grouped, so that any one of the one or more physical antennas included in the port group 2 may be determined as a transmit antenna configured to send information to the network device.

Optionally, that the 1-bit indication information in the DCI is "1", and a subframe number of a subframe in which the DCI is located is an even number may be antenna selection indication information. For ease of description, antenna selection indication information 3 may be used as an example for description. The antenna selection indication information 3 may be used to indicate that a physical antenna whose physical antenna port is 3 and that is in the x physical antennas of the terminal device is a transmit antenna; and/or the antenna selection indication information 3 may be used to indicate a port group 3 in a plurality of antenna groups into which the x physical antennas of the terminal device are grouped, so that any one of the one or more physical antennas included in the port group 3 may be determined as a transmit antenna configured to send information to the network device.

In some feasible implementations, when the terminal supports 2TxR, 1-bit indication information in the DCI may be "0" and a subframe number of a subframe in which the DCI is located is an odd number may be used as the antenna selection indication information 0, that the 1-bit indication information in the DCI is "0" and a subframe number of a subframe in which the DCI is located is an even number may be used as the antenna selection indication information 1, that the 1-bit indication information in the DCI is "1" and a subframe number of a subframe in which the DCI is located is an odd number is the antenna selection indication information 2, that the 1-bit indication information in the DCI is "1" and a subframe number of a subframe in which the DCI is located is an even number is used as the antenna selection indication information 3, and two physical antenna ports or one physical antenna group of the terminal device are respectively indicated by using the antenna selection indication information 0, 1, 2, and 3. For example, the antenna selection indication information 0, 1, 2, and 3 may respectively represent physical antenna groups 0, 1, 2, and 3 that enable the terminal device, namely, a port group 0, a port group 1, a port group 2, and a port group 3. For details, refer to the foregoing implementation used when the terminal device supports 1TxR. Details are not described herein again. x may be 4, 8, or the like. This is not limited herein.

In this embodiment of this application, the network device may indicate the transmit antenna selection manner to the terminal device by using the indication information, of the specified bit, in the DCI and the odd/even-number feature of the subframe used for the DCI sent to the terminal device, and the terminal device may obtain the antenna selection indication information by using indication information, of a specified bit, in the DCI and an odd/even-number characteristic of a subframe in which the DCI received from the network device is located, and use an antenna indicated by using the antenna selection indication information as the transmit antenna. In this embodiment of this application, selection of transmit antennas of different terminal devices having different capabilities can be supported, a transmission form of the antenna selection indication information for indicating the transmit antenna of the terminal device is added, and processing manner diversity of the antenna selection indication information of the terminal device is improved.

S305: The terminal device selects one or more antennas based on the antenna selection indication information, to send information to the network device.

In some feasible implementations, after determining the transmit antenna in any one or more of the foregoing implementation 1 to implementation 5, the terminal device may send information to the network device based on the selected transmit antenna. As described above, herein, the information sent by the terminal device to the network device may be one or more of PUSCH data, a PUCCH, or an SRS. This may be specifically determined based on an actual application scenario. This is not limited herein.

In this embodiment of this application, when three, four or more physical antennas are configured for the terminal device, and the terminal device only can support sending using some of the physical antennas, for example, one or more physical antennas, the terminal device may select, from the plurality of physical antennas configured for the terminal device, a corresponding physical antenna as a transmit antenna by using antenna selection indication information that is in a plurality of representations and that is delivered by the network device, and send the information to the network device based on a transmit antenna indicated by using the antenna selection indication information delivered by the network device, so that closed-loop antenna selection of the terminal device is implemented. Therefore, reliability of uplink information transmission of the terminal device can be ensured, and reliability of data transmission of a communications system can be enhanced.

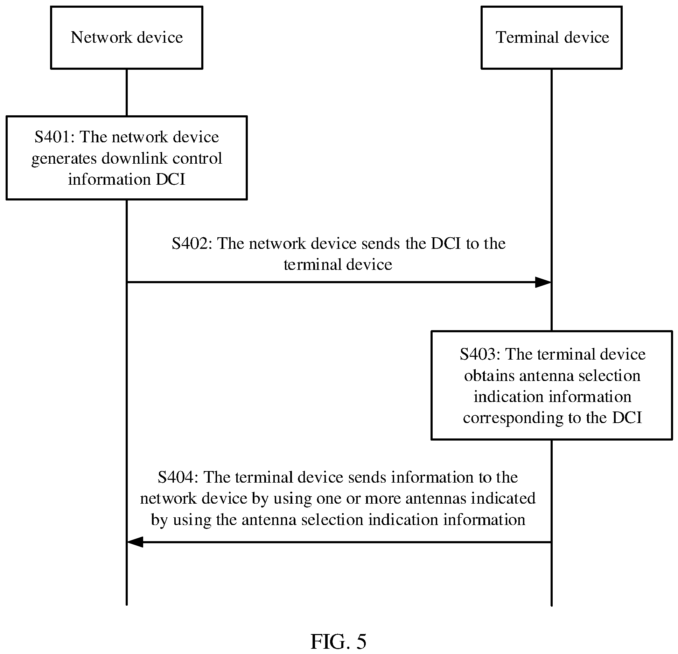

FIG. 5 is another schematic flowchart of an antenna selection method according to an embodiment of this application. The method provided in this embodiment of this application may include the following steps.

S401: A network device generates downlink control information DCI.

S402: The network device sends the DCI to a terminal device.

Optionally, in some feasible implementations, the network device may determine an antenna selection manner of the terminal device based on capability information or an uplink transmission mode of the terminal device, determine antenna selection indication information based on the antenna selection manner of the terminal device, and generate DCI including the antenna selection indication information. For details, refer to the implementations provided in step S301 and step S302 in the foregoing embodiment. Details are not described herein again. The antenna selection indication information corresponding to the DCI is bit information included in the DCI. The network device may send the DCI to the terminal device, and indicate, by using the bit information included in the DCI, the terminal device to select one or more first antennas used for uplink transmission from a plurality of physical antennas supported by the terminal device. A correspondence between the bit information, of the bit field, included in the DCI and the one or more first antennas is specified in a communications protocol, or is configured by the network device based on the plurality of antennas of the terminal device. For details, refer to the implementation provided in the foregoing implementation 2. Details are not described herein again.

Optionally, in some feasible implementations, the network device may determine an antenna selection manner of the terminal device based on capability information or an uplink transmission mode of the terminal device, and determine antenna selection indication information based on the antenna selection manner of the terminal device. For details, refer to the implementations provided in step S301 and step S302 in the foregoing embodiment. Details are not described herein again. The antenna selection indication information is a CRC mask used to scramble the DCI. The network device may scramble the DCI by using a CRC corresponding to one or more first antennas used by the terminal device for uplink transmission, to obtain the scrambled DCI, and send the scrambled DCI to the terminal device. The terminal device is indicated, by using a CRC mask of the scrambled DCI, to select one or more first antennas used for uplink transmission from a plurality of physical antennas supported by the terminal device. A correspondence between the CRC mask of the DCI and the one or more first antennas is specified in a communications protocol, or is configured by the network device based on the plurality of antennas of the terminal device. For details, refer to the implementation provided in the foregoing implementation 1. Details are not described herein again.

Optionally, in some feasible implementations, the network device may determine an antenna selection manner of the terminal device based on capability information or an uplink transmission mode of the terminal device, and determine antenna selection indication information based on the antenna selection manner of the terminal device. For details, refer to the implementations provided in step S301 and step S302 in the foregoing embodiment. Details are not described herein again. The antenna selection indication information is used to indicate a time domain occupied by the DCI, and the time domain includes a subframe occupied by the DCI or a slot occupied by the DCI. The network device may send the DCI to the terminal device in a time domain corresponding to one or more antennas used by the terminal device for uplink transmission, and indicate, by using identification information of the time domain, for example, a number of the subframe occupied by the DCI or a number of the slot occupied by the DCI, the terminal device to select one or more first antennas used for uplink transmission from a plurality of physical antennas supported by the terminal device. A correspondence between the identification information of the time domain occupied by the DCI and the one or more first antennas is specified in a communications protocol, or is configured by the network device based on the plurality of antennas of the terminal device. For details, refer to the implementation provided in the implementation 4 or the implementation 5. Details are not described herein again.

Optionally, the network device may indicate one or more first antennas used for uplink transmission to the terminal device in any one or a combination of the foregoing implementations. For details, refer to any one of the implementation 1 to the implementation 5 in the foregoing embodiment. Details are not described herein again.

S403: The terminal device obtains the antenna selection indication information corresponding to the DCI.

S404: The terminal device sends information to the network device by using one or more antennas indicated by using the antenna selection indication information.

In some feasible implementations, the network device sends the DCI to the terminal device. The terminal device may receive the DCI from the network device, and obtain the antenna selection indication information corresponding to the DCI, to send the information to the network device by using the one or more antennas indicated by using the antenna selection indication information. For details, refer to the implementations provided in the step S301 to the step S305 in the foregoing embodiment. Details are not described herein again.

In this embodiment of this application, when three, four or more physical antennas are configured for the terminal device, and the terminal device only can support sending using some of the physical antennas, for example, one or more physical antennas, the terminal device may select, from the plurality of physical antennas configured for the terminal device, a corresponding physical antenna as a transmit antenna by using antenna selection indication information that is in a plurality of representations and that is delivered by the network device, and send the information to the network device based on a transmit antenna indicated by using the antenna selection indication information delivered by the network device, so that closed-loop antenna selection of the terminal device is implemented. Therefore, reliability of uplink information transmission of the terminal device can be ensured, and reliability of data transmission of a communications system can be enhanced.

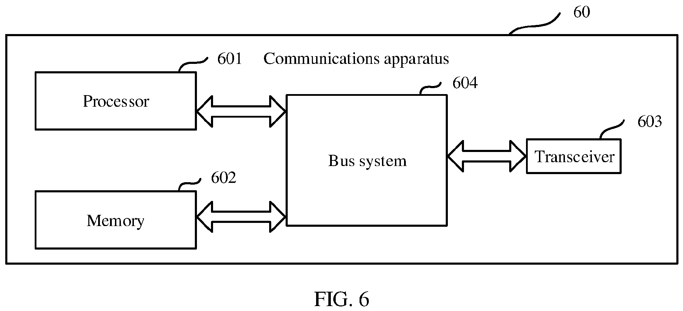

FIG. 6 is a schematic structural diagram of a communications apparatus according to an embodiment of this application. As shown in FIG. 6, the communications apparatus 60 provided in this embodiment of this application includes a processor 601, a memory 602, a transceiver 603, and a bus system 604.

The processor 601, the memory 602, and the transceiver 603 are connected by using the bus system 604.

The memory 602 is configured to store a program. Specifically, the program may include program code. The program code includes a computer operation instruction. The memory 602 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). Only one memory is shown in FIG. 6. Certainly, a plurality of memories may alternatively be disposed as required. The memory 602 may alternatively be a memory in the processor 601. This is not limited herein.

The memory 602 stores the following elements: an executable module or a data structure, a subset thereof, or an extended set thereof:
an operation instruction, including various operation instructions and used to implement various operations; and
an operating system, including various system programs and used to implement various basic services and process a hardware-based task.

The processor 601 controls an operation of the communications apparatus 60. The processor 601 may be one or more central processing units (central processing unit, CPU). When the processor 601 is one CPU, the CPU may be a single-core CPU, or may be a multi-core CPU.

During specific application, components of the communications apparatus 60 are coupled together by using the bus system 604. In addition to a data bus, the bus system 604 includes a power bus, a control bus, a status signal bus, and the like. However, for clear description, various buses in FIG. 6 are all marked as the bus system 604. For ease of illustration, FIG. 6 merely shows an example of the bus system 604.

The method, of the terminal device, disclosed in FIG. 4 or FIG. 5 provided in the embodiments of this application, the method, of the terminal device, disclosed in the embodiments, the method, of the network device, disclosed in FIG. 4 or FIG. 5 provided in the embodiments of this application, or the method, of the network device, disclosed in the embodiments may be applied to the processor 601, or may be implemented by the processor 601. The processor 601 may be an integrated circuit chip, and has a signal processing capability. In an implementation process, the steps in the foregoing methods may be implemented by using a hardware integrated logic circuit in the processor 601, or by using instructions in a form of software. The foregoing processor 601 may be a general purpose processor, a digital signal processor (digital signal processing, DSP), an application-specific integrated circuit (application specific integrated circuit, ASIC), a field programmable gate array (field-programmable gate array, FPGA) or another programmable logic device, a discrete gate or a transistor logic device, or a discrete hardware component. The processor 601 may implement or perform the methods, the steps, and logical block diagrams that are disclosed in the embodiments of this application. The general purpose processor may be a microprocessor, or the processor may be any conventional processor or the like. The steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 602. The processor 601 reads information in the memory 602, and performs, in combination with hardware of the processor 601, the method steps of the terminal device described in FIG. 4 or FIG. 5 or in the embodiments, or performs, in combination with hardware of the processor 601, the method steps of the network device described in FIG. 4 or FIG. 5 or in the embodiments.

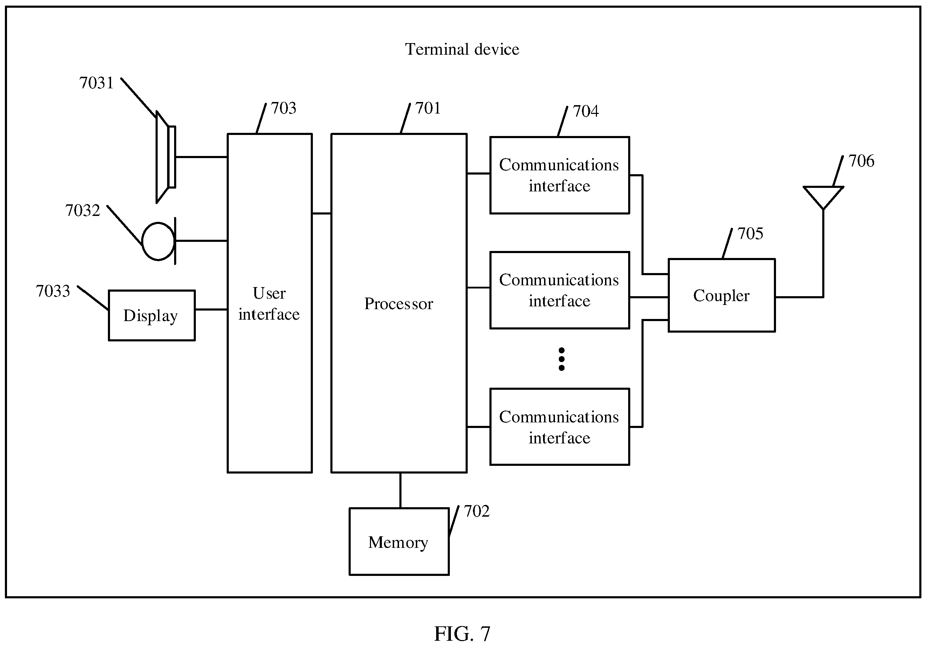

FIG. 7 is a schematic structural diagram of a terminal device according to an embodiment of this application. As shown in FIG. 7, the terminal device provided in this embodiment of this application includes function modules such as a processor 701, a memory 702, a user interface 703, communications interfaces 704, a coupler 705, and an antenna 706. The memory 702 may correspond to the memory 602 in the communications apparatus 60 shown in FIG. 6. The memory 702 is configured to store a program. Specifically, the program may include program code. The program code includes a computer operation instruction. The memory 702 includes but is not limited to a RAM, a ROM, an EPROM, a CD-ROM, or the like. This is not limited herein. In addition, the memory 702 may alternatively be a memory in the processor 701. This is not limited herein.

The memory 702 stores the following elements: an executable module or a data structure, a subset thereof, or an extended set thereof:
an operation instruction, including various operation instructions and used to implement various operations; and
an operating system, including various system programs and used to implement various basic services and process a hardware-based task.

The processor 701 controls an operation of the terminal device. The processor 701 may be one or more CPUs. The method, of the terminal device, disclosed in FIG. 4 or FIG. 5 provided in the embodiments of this application or the method, of the terminal device, disclosed in the embodiments may be applied to the processor 701, or may be implemented by the processor 701. The processor 701 may be an integrated circuit chip, and has a signal processing capability. In an implementation process, the steps in the foregoing methods may be implemented by using a hardware integrated logic circuit in the processor 701, or by using instructions in a form of software. The foregoing processor 701 may be a general purpose processor, a DSP, an ASIC, an FPGA or another programmable logic device, a discrete gate or a transistor logic device, or a discrete hardware component. The processor 701 may implement or perform the methods, the steps, and logical block diagrams that are disclosed in the embodiments of this application. The general purpose processor may be a microprocessor, or the processor may be any conventional processor or the like. The steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 702. The processor 701 reads information in the memory 702, and performs, in combination with hardware of the processor 701, the method steps of the terminal device described in FIG. 4 or FIG. 5 or in the embodiments.

The user interface 703 in the terminal device is mainly configured to provide an input interface for a user, to obtain data input by the user. The user interface 703 may include a multimedia input and/or output device 7031, a camera 7032, a display 7033, and the like. This is not limited herein. The user interface 703 may be an information input and/or output module that interacts with the user of the terminal device, for example, a microphone and/or a speaker, a front-facing camera and/or a rear-facing camera, and a touchscreen of a terminal device such as a mobile phone. This is not limited herein. Optionally, the user interface 703 may further include a standard wired interface, a standard wireless interface, and the like. This is not limited herein.

The processor 701 in the terminal device may be coupled to an input device such as the antenna 706 by using one or more communications interfaces 704 and the coupler 705, and perform, with reference to another function module, the implementation performed by the terminal device described in FIG. 4 or FIG. 5 or in the embodiments. For details, refer to the implementations provided in the embodiments. This is not limited herein. "Coupling" herein means that two components are directly or indirectly combined with each other. Such combination may be fixed or mobile, and such combination may allow communication of fluid, electricity, an electrical signal, or another type of signal between the two components.

In this embodiment of this application, when three, four or more physical antennas are configured for the terminal device, and the terminal device only can support sending using some of the physical antennas, for example, one or more physical antennas, the terminal device may select, from the plurality of physical antennas configured for the terminal device, a corresponding physical antenna as a transmit antenna by using function modules such as the processor 701 included in the terminal device and in combination with antenna selection indication information that is in a plurality of representations and that is received from a network device by a function module such as the antenna 706, and send information to the network device based on a transmit antenna indicated by using the antenna selection indication information delivered by the network device, so that closed-loop antenna selection of the terminal device is implemented. Therefore, reliability of uplink information transmission of the terminal device can be ensured, and reliability of data transmission of a communications system can be enhanced.

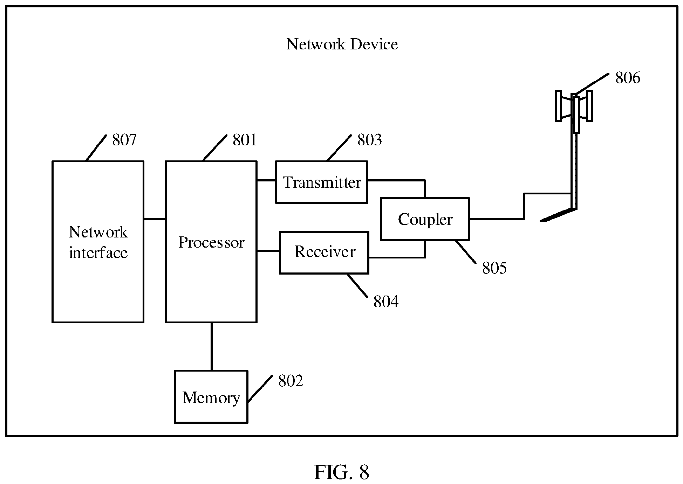

FIG. 8 is a schematic structural diagram of a network device according to an embodiment of this application. As shown in FIG. 8, the network device provided in this embodiment of this application includes a processor 801, a memory 802, a transmitter 803, a receiver 804, a network interface 807, and the like. Function modules such as the processor 801, the transmitter 803, and the receiver 804 may be coupled to an input device such as an antenna 806 by using a coupler 805. The processor 801 may perform, with reference to the coupled function modules, the implementation performed by the network device described in FIG. 4 or FIG. 5 or in the embodiments. For details, refer to the implementations provided in the embodiments. This is not limited herein. "Coupling" herein means that two components are directly or indirectly combined with each other. Such combination may be fixed or mobile, and such combination may allow communication of fluid, electricity, an electrical signal, or another type of signal between the two components.

The memory 802 may correspond to the memory 602 in the communications apparatus 60 shown in FIG. 6. The memory 802 is configured to store a program. Specifically, the program may include program code. The program code includes a computer operation instruction. The memory 802 includes but is not limited to a RAM, a ROM, an EPROM, a CD-ROM, or the like. This is not limited herein. In addition, the memory 802 may alternatively be a memory in the processor 801. This is not limited herein.

The memory 802 stores the following elements: an executable module or a data structure, a subset thereof, or an extended set thereof:
an operation instruction, including various operation instructions and used to implement various operations; and
an operating system, including various system programs and used to implement various basic services and process a hardware-based task.

The processor 801 controls an operation of the network device. The processor 801 may be one or more CPUs. The method, of the network device, disclosed in FIG. 4 or FIG. 5 provided in the embodiments of this application or the method, of the network device, disclosed in the embodiments may be applied to the processor 801, or may be implemented by the processor 801. The processor 801 may be an integrated circuit chip, and has a signal processing capability. In an implementation process, the steps in the foregoing methods may be implemented by using a hardware integrated logic circuit in the processor 801, or by using instructions in a form of software. The foregoing processor 801 may be a general purpose processor, a DSP, an ASIC, an FPGA or another programmable logic device, a discrete gate or a transistor logic device, or a discrete hardware component. The processor 801 may implement or perform the methods, the steps, and logical block diagrams that are disclosed in the embodiments of this application. The general purpose processor may be a microprocessor, or the processor may be any conventional processor or the like. The steps of the methods disclosed with reference to the embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 802. The processor 801 reads information in the memory 802, and performs, in combination with hardware of the processor 801, the method steps of the network device described in FIG. 4 or FIG. 5 or in the embodiments. Optionally, the network interface 807 may include a standard wired interface, a standard wireless interface (for example, a Wi-Fi interface), and the like. This is not limited herein.

In this embodiment of this application, when three, four, or more physical antennas are configured for a terminal device, and the terminal device only can support sending using some of the physical antennas, for example, one or more physical antennas, the network device may configure antenna selection indication information corresponding to one or more antennas used by the terminal device for uplink transmission in an antenna selection manner supported by the terminal device, and send the antenna selection indication information to the terminal device. The terminal device selects, from the plurality of physical antennas configured for the terminal device, a corresponding physical antenna as a transmit antenna by using antenna selection indication information that is in a plurality of representations and that is received from the network device, and send information to the network device based on a transmit antenna indicated by using the antenna selection indication information delivered by the network device, so that closed-loop antenna selection of the terminal device is implemented. Therefore, reliability of uplink information transmission of the terminal device can be ensured, and reliability of data transmission of a communications system can be enhanced.

An embodiment of this application provides a computer-readable storage medium. The computer-readable storage medium stores an instruction. When the instruction is run on a terminal device, the terminal device is enabled to perform the implementations performed by the terminal device described in FIG. 4 or FIG. 5 or in the embodiments. For details, refer to the implementations provided in the embodiments. Details are not described herein again.

An embodiment of this application provides a computer-readable storage medium. The computer-readable storage medium stores an instruction. When the instruction is run on a network device, the network device is enabled to perform the implementations performed by the network device described in FIG. 4 or FIG. 5 or in the embodiments. For details, refer to the implementations provided in the embodiments. Details are not described herein again.

An embodiment of this application provides an antenna selection system. The antenna selection system includes a processor. The processor is configured to couple to a memory, and read and run an instruction in the memory, to support a terminal device in implementing the implementations performed by the terminal device described in FIG. 4 or FIG. 5 or in the embodiments, for example, generating or processing information in the terminal device in the embodiments. In a possible design, the antenna selection system further includes the memory. The memory is configured to store a program instruction and data that are necessary for the terminal device. The antenna selection system may include a chip, or may include a chip and another discrete device.

An embodiment of this application provides an antenna selection system. The antenna selection system includes a processor. The processor is configured to couple to a memory, and read and run an instruction in the memory, to support a network device in implementing the implementations performed by the network device described in FIG. 4 or FIG. 5 or in the embodiments, for example, generating or processing information in the network device in the embodiments. In a possible design, the antenna selection system further includes the memory. The memory is configured to store a program instruction and data that are necessary for the network device. The antenna selection system may include a chip, or may include a chip and another discrete device.

An embodiment of this application further provides a computer program product including an instruction. When the computer program product runs on a terminal device, the terminal device is enabled to perform the implementations performed by the terminal device described in FIG. 4 or FIG. 5 or in the embodiments.

An embodiment of this application further provides a computer program product including an instruction. When the computer program product runs on a network device, the network device is enabled to perform the implementations performed by the network device described in FIG. 4 or FIG. 5 or in the embodiments.

A person of ordinary skill in the art may understand that all or some of the procedures of the methods in the embodiments may be implemented by a computer program instructing relevant hardware. The program may be stored in a computer-readable storage medium. When the program is executed, the procedures of the method embodiments may be performed. The foregoing storage medium includes: any medium that can store program code, such as a ROM, a RAM, a magnetic disk, or an optical disc.

## Claims

1. An antenna selection method, comprising:
receiving downlink control information DCI from a network device;
obtaining antenna selection indication information corresponding to the DCI, wherein the antenna selection indication information is used to indicate one or more first antennas in at least three antennas of a terminal device; and
sending information to the network device by using the one or more first antennas.

2. The method according to claim 1, wherein the antenna selection indication information corresponding to the DCI is represented by using one or more of the following:
bit information comprised in the DCI;
a cyclic redundancy check CRC mask of the DCI; and
identification information of a time domain occupied by the DCI.

3. The method according to claim 2, wherein the bit information comprised in the DCI is a bit value corresponding to the one or more first antennas used for uplink transmission;
the CRC mask of the DCI is a mask corresponding to the one or more first antennas used for uplink transmission; or
the identification information of the time domain occupied by the DCI meets time domain identification information corresponding to the one or more first antennas used for uplink transmission.

4. The method according to any one of claims 1 to 3, wherein the at least three antennas of the terminal device belong to at least two antenna groups; and
the antenna selection indication information is used to indicate a first antenna group in the at least two antenna groups, and the first antenna group comprises the one or more first antennas.

5. The method according to claim 4, wherein the at least two antenna groups are specified in a communications protocol.

6. The method according to claim 4, wherein a correspondence between the antenna selection indication information and the first antenna group is specified in a communications protocol or received from the network device.

7. The method according to any one of claims 4 to 6, wherein the method further comprises:
receiving first indication information from the network device, wherein the first indication information is used to indicate the at least two antenna groups.

8. The method according to any one of claims 4 to 6, wherein the method further comprises:
sending second indication information to the network device, wherein the second indication information is used to indicate the at least two antenna groups.

9. The method according to claim 7, wherein the receiving first indication information from the network device comprises:
receiving radio resource control RRC signaling from the network device, wherein the RRC signaling comprises the first indication information; or
receiving media access control control element MAC CE signaling from the network device, wherein the MAC CE signaling comprises the first indication information.

10. The method according to any one of claims 1 to 9, wherein the method further comprises:
reporting capability information to the network device, wherein the capability information is used to indicate that the terminal device supports selection of the one or more antennas from the at least three antennas.

11. The method according to claim 10, wherein the capability information is used to indicate that the terminal device supports one or more of 1T4R, 2T4R, 1T8R, and 2T8R.

12. The method according to any one of claims 1 to 9, wherein the antenna selection indication information is based on an uplink transmission mode of the terminal device.

13. The method according to any one of claims 1 to 12, wherein a correspondence between the antenna selection indication information and the one or more first antennas is specified in the communications protocol or received from the network device.

14. An antenna selection method, comprising:
generating downlink control information DCI; and
sending the DCI to a terminal device, wherein
antenna selection indication information corresponding to the DCI is used to indicate one or more first antennas that are in at least three antennas of the terminal device and that are used for uplink transmission.

15. The method according to claim 14, wherein the antenna selection indication information corresponding to the DCI is represented by using one or more of the following:
bit information comprised in the DCI;
a cyclic redundancy check CRC mask of the DCI; and
identification information of a time domain occupied by the DCI.

16. The method according to claim 15, wherein the bit information comprised in the DCI is a bit value corresponding to the one or more first antennas used for uplink transmission;
the CRC mask of the DCI is a mask corresponding to the one or more first antennas used for uplink transmission; or
the identification information of the time domain occupied by the DCI meets time domain identification information corresponding to the one or more first antennas used for uplink transmission.

17. The method according to any one of claims 14 to 16, wherein the at least three antennas of the terminal device belong to at least two antenna groups; and
the antenna selection indication information is used to indicate a first antenna group in the at least two antenna groups, and the first antenna group comprises the one or more first antennas.

18. The method according to claim 17, wherein the at least two antenna groups are specified in a communications protocol.

19. The method according to claim 17, wherein a correspondence between the antenna selection indication information and the first antenna group is specified in a communications protocol or configured based on the at least two antenna groups.

20. The method according to any one of claims 17 to 19, wherein the method further comprises:
sending first indication information to the terminal device, wherein the first indication information is used to indicate the at least two antenna groups.

21. The method according to any one of claims 17 to 19, wherein the method further comprises:
receiving second indication information from the terminal device, wherein the second indication information is used to indicate the at least two antenna groups.

22. The method according to claim 20, wherein the sending first indication information to the terminal device comprises:
sending radio resource control RRC signaling to the terminal device, wherein the RRC signaling comprises the first indication information; or
sending media access control control element MAC CE signaling to the terminal device, wherein the MAC CE signaling comprises the first indication information.

23. The method according to any one of claims 14 to 22, wherein the method further comprises:
determining the antenna selection indication information.

24. The method according to claim 23, wherein the determining the antenna selection indication information comprises:
determining the antenna selection indication information based on capability information of the terminal device, wherein the capability information is used to indicate a capability of the terminal device to support selection of the one or more antennas from the at least three antennas.

25. The method according to claim 23, wherein the determining the antenna selection indication information comprises:
determining the antenna selection indication information based on an uplink transmission mode of the terminal device.

26. The method according to claim 24 or 25, wherein the capability information and/or the uplink transmission mode are/is used to indicate that the terminal device supports one or more of 1T4R, 2T4R, 1T8R, and 2T8R.

27. The method according to any one of claims 14 to 26, wherein a correspondence between the antenna selection indication information and the one or more first antennas is specified in the communications protocol.

28. A communications apparatus, comprising a processor, wherein
the processor is configured to: couple to a memory, and read and run an instruction in the memory, to implement the method according to any one of claims 1 to 13.

29. The communications apparatus according to claim 28, wherein the communications apparatus further comprises the memory.

30. A communications apparatus, comprising a processor, wherein
the processor is configured to: couple to a memory, and read and run an instruction in the memory, to implement the method according to any one of claims 14 to 27.

31. The communications apparatus according to claim 30, wherein the communications apparatus further comprises the memory.

32. A computer program product comprising an instruction, wherein when the computer program product runs on a terminal device, the terminal device is enabled to perform the method according to any one of claims 1 to 13.

33. A computer program product comprising an instruction, wherein when the computer program product runs on a network device, the network device is enabled to perform the method according to any one of claims 14 to 27.
